# EUROPEAN PATENT APPLICATION

(11) **EP 4 842 042 A1**
(43) Date of publication of application: **18.11.2026**
(21) Application number: 25747429.6
(22) Date of filing: 06.01.2025
(51) Int. Cl.: H04W 24/06

(54) **MODEL MONITORING METHOD, APPARATUS AND SYSTEM**

(30) Priority: 29.01.2024 CN 202410129894
(71) Applicant: Huawei Technologies Co., Ltd., Shenzhen, Guangdong 518129 (CN)
(72) Inventor: CHAI, Xiaomeng, Shenzhen, Guangdong 518129 (CN); LI, Yuan, Shenzhen, Guangdong 518129 (CN); JIN, Yu, Shenzhen, Guangdong 518129 (CN); SUN, Yan, Shenzhen, Guangdong 518129 (CN)
(74) Representative: Huawei European IPR
(86) International application number: PCT/CN2025/070658
(87) International publication number: WO 2025/161853

(57) **Abstract**

Embodiments of this application provide a model monitoring method, apparatus, and system. The method includes: receiving a reference signal; and sending first information and second information, where the first information includes ground truth CSI, the ground truth CSI is obtained based on the reference signal, the second information includes a first CSI report, the first CSI report is obtained based on the ground truth CSI, and the first CSI report is a complete report, or the first CSI report is an omitted report. In this manner, a network device performs model monitoring by using a complete CSI report, so that impact of CSI omission can be excluded, and performance of a model is monitored. Alternatively, the first CSI report is the omitted report, and a network device performs model monitoring by using an omitted CSI report, so that robustness of a model for CSI omission can be monitored.

## Description

This application claims priority to Chinese Patent Application No. 202410129894.8, filed with the China National Intellectual Property Administration on January 29, 2024 and entitled "MODEL MONITORING METHOD, APPARATUS, AND SYSTEM", which is incorporated herein by reference in its entirety.

### TECHNICAL FIELD

This application relates to the field of communication technologies, and in particular, to a model monitoring method, apparatus, and system.

### BACKGROUND

In a new radio (New radio, NR) communication system, a base station needs to obtain downlink channel state information (Channel State Information, CSI), which is used to determine configurations such as a resource, a modulation and coding scheme (Modulation and coding scheme, MCS), and precoding that are used to schedule a downlink data channel for user equipment (user equipment, UE). In a time division duplex (Time Division Duplex, TDD) system, because there is reciprocity between an uplink channel and a downlink channel, the base station may obtain uplink CSI by measuring an uplink reference signal, to infer accurate downlink CSI, for example, use the uplink CSI as the downlink CSI. In a frequency division duplex (Frequency Division Duplex, FDD) system, uplink and downlink reciprocity cannot be ensured, and downlink CSI is obtained by UE by measuring a downlink reference signal. For example, the UE obtains the downlink CSI by measuring a channel information reference signal (channel state information reference signal, CSI-RS), a synchronization signal block (Synchronization signal/Physical broadcast channel block, SSB), or the like. Therefore, the UE needs to generate a CSI report in a manner predefined in a protocol or configured by the base station, and feed back the CSI to the base station, so that the base station obtains the downlink CSI.

When an artificial intelligence (artificial intelligence, AI)-based CSI feedback model is monitored, if CSI omission occurs (for example, when uplink resources used to transmit a CSI report are insufficient to transmit a complete CSI report, the UE omits a part of bits with a low priority in the CSI report), there may be two factors that cause poor monitored CSI feedback performance: poor performance of the CSI feedback model and CSI omission. In a conventional technology, how to monitor a CSI feedback model in this case and how to determine which factor causes poor CSI feedback performance are not specified.

### SUMMARY

This application discloses a model monitoring method, apparatus, and system, so that model performance can be monitored based on an actual requirement, for example, impact of CSI omission is excluded, and performance of a model is monitored; or robustness of a model for CSI omission can be monitored.

According to a first aspect, an embodiment of this application provides a model monitoring method, performed by user equipment or a circuit used in the user equipment. The method includes: The user equipment receives a reference signal. Further, the user equipment sends first information and second information. The first information includes ground truth CSI. The ground truth CSI is obtained based on the reference signal. The second information includes a first CSI report, and the first CSI report is obtained based on the ground truth CSI. The first CSI report is a complete report.

In this embodiment of this application, the user equipment sends the first information and the second information to a network device, where the first information includes the ground truth CSI, and the second information includes the first CSI report. The first CSI report is the complete report. In this way, the network device can obtain model monitoring performance based on the ground truth CSI and the first CSI report. In this manner, the network device can perform model monitoring by using a complete CSI report, so that impact of CSI omission can be excluded, and performance of a model is monitored.

The ground truth CSI may be understood as CSI obtained by the user equipment UE by measuring a downlink reference signal. The CSI is uncompressed CSI. The CSI may be a channel response matrix measured by the UE, a precoding matrix obtained by processing the channel response matrix, or the like. The ground truth CSI may also be referred to as input CSI, a model input, measurement CSI, original CSI, ground-truth CSI, or the like. This is not limited in this solution.

The ground truth CSI is obtained based on the reference signal. For example, the ground truth CSI may be obtained by measuring the reference signal, or the ground truth CSI may be obtained by performing eigen decomposition or singular value decomposition on CSI obtained through measurement.

The first CSI report may be referred to as CSI feedback (CSI feedback), a CSI latent space (latent space), quantized CSI (quantized CSI), compressed CSI (compressed CSI, CSI compression), or the like. The first CSI report may be used for model monitoring.

The complete report may be understood as a CSI report without omission (omission), and the complete report may include information such as compressed CSI or quantized CSI.

In a possible implementation, the user equipment and the network device perform model monitoring by using a complete CSI report based on a protocol definition.

In another possible implementation, the user equipment further receives first indication information, where the first indication information indicates to use a complete CSI report to perform model monitoring; or the first indication information indicates the user equipment to send a complete CSI report.

In a possible implementation, the user equipment further sends third information, where the third information includes a second CSI report, the second CSI report is an omitted report, and the second CSI report is obtained based on the reference signal.

The omitted report may be understood as a CSI report in which partial content is discarded or omitted. The omitted report may include partial content of compressed CSI or quantized CSI. In other words, the omitted report is a report obtained by omitting the compressed CSI or the quantized CSI information in the complete report. For example, when uplink resources used to transmit a CSI report are insufficient to transmit a complete CSI report, the user equipment omits a part of bits or partial content with a low priority in the CSI report.

The second CSI report is also used for model monitoring. The second CSI report may be obtained by measuring the reference signal. For example, the second CSI report and the first CSI report are obtained by measuring the reference signal at a same time, that is, the omitted CSI report is obtained by performing omission on the first CSI report (a complete CSI report); or the second CSI report and the first CSI report are obtained by measuring the reference signal at different times.

In this example, the user equipment not only sends a complete CSI report (the first CSI report) to the network device, but also sends an omitted CSI report (the second CSI report). Both the first CSI report and the second CSI report are used for model monitoring. The network device may obtain first model monitoring performance and second model monitoring performance based on the first CSI report and the second CSI report. Based on this example, both performance of a model and robustness of the model for CSI omission can be monitored.

In a possible implementation, the user equipment further sends fourth information, where the fourth information includes a third CSI report, the third CSI report is an omitted report, and the third CSI report is used for CSI feedback.

The third CSI report is used for CSI feedback. For example, during model inference, CSI feedback is performed by using an AI model, so that the network device obtains precoding used for downlink transmission.

In a possible implementation, the first information and the second information are reported by using higher layer signaling.

The higher layer signaling may be, for example, medium access control (Medium Access Control, MAC) layer signaling or radio resource control (Radio Resource Control, RRC) signaling.

In a possible implementation, the user equipment further receives fifth information, where the fifth information indicates a first resource, and the first resource is used to transmit a complete CSI report.

In a model monitoring process, or when the network device configures the user equipment to feed back a CSI report used for model monitoring, the network device needs to allocate sufficient uplink resources to the user equipment for transmitting a complete CSI report. In this way, the user equipment can transmit the complete CSI report on the resources.

In a possible implementation, the user equipment does not expect that CSI omission occurs on a CSI report used for model monitoring, or the user equipment does not expect to omit a CSI report used for model monitoring, or the user equipment does not expect that a resource used to transmit a CSI report used for model monitoring is less than a resource needed for the CSI report used for model monitoring.

In this way, the network device needs to configure sufficient resources for the user equipment to transmit a complete CSI report.

In a possible implementation, when a CSI report used for model monitoring is omitted, or when a resource used to transmit the CSI report used for model monitoring is less than a resource needed for the CSI report used for model monitoring, the user equipment sends sixth information to the network device, where the sixth information includes at least one of a size of the CSI report used for model monitoring, a size of an omitted part of the CSI report used for model monitoring, the resource needed for the CSI report used for model monitoring, and a resource needed for the omitted part of the CSI report used for model monitoring.

In this way, the network device may allocate an additional resource for transmitting the CSI report to transmit the complete CSI report.

In a possible implementation, a priority of a CSI report used for model monitoring is higher than a priority of another CSI report, or priorities of report content in a CSI report used for model monitoring are not distinguished, or a priority of a CSI report used for monitoring is the same as a priority of a report used to feed back ground truth CSI, and is higher than a priority of another CSI report.

When the priority of the CSI report used for model monitoring is higher than the priority of the another CSI report, when a conflict occurs on two or more CSI reports of the user equipment in time domain, the user equipment does not send a CSI report with a lower priority in some cases.

According to a second aspect, an embodiment of this application provides a model monitoring method, performed by user equipment or a circuit used in the user equipment. The method includes: The user equipment receives a reference signal. Further, the user equipment sends first information and second information. The first information includes ground truth CSI. The ground truth CSI is obtained based on the reference signal. The second information includes a first CSI report, and the first CSI report is obtained based on the ground truth CSI. The first CSI report is an omitted report.

In this embodiment of this application, the user equipment sends the first information and the second information to a network device, where the first information includes the ground truth CSI, and the second information includes the first CSI report. The first CSI report is the omitted report. In this way, the network device can obtain model monitoring performance based on the ground truth CSI and the first CSI report. In this manner, the network device performs model monitoring by using an omitted CSI report, so that robustness of a model for CSI omission can be monitored.

The first CSI report is the omitted report. The omitted report may be understood as a CSI report in which partial content is discarded or omitted. The omitted report may include partial content of compressed CSI or quantized CSI. In other words, the omitted report is a report obtained by omitting the compressed CSI or the quantized CSI information in a complete report. For example, when uplink resources used to transmit a CSI report are insufficient to transmit a complete CSI report, the user equipment omits a part of bits or partial content with a low priority in the CSI report.

In a possible implementation, the user equipment and the network device perform model monitoring by using an omitted CSI report based on a protocol definition.

In another possible implementation, the network device sends second indication information to the user equipment, where the second indication information indicates to use an omitted CSI report to perform model monitoring; or the second indication information indicates to send an omitted CSI report.

In a possible implementation, the user equipment reports, by using higher layer signaling, a CSI report (namely, the first CSI report, the following second CSI report, or the like) used for model monitoring. The higher layer signaling may be, for example, medium access control MAC layer signaling or radio resource control RRC signaling.

In a possible implementation, a priority of a CSI report used for model monitoring is higher than a priority of another CSI report, or priorities of report content in a CSI report used for model monitoring are not distinguished, or a priority of a CSI report used for monitoring is the same as a priority of a report used to feed back ground truth CSI, and is higher than a priority of another CSI report.

In a possible implementation, the user equipment further sends third information to the network device, where the third information includes a second CSI report, the second CSI report is a complete report, and the second CSI report is obtained based on the reference signal.

In a possible implementation, the user equipment sends fourth information to the network device, where the fourth information includes a third CSI report, the third CSI report is an omitted report, and the third CSI report is used for CSI feedback.

Based on the third CSI report, the network device obtains precoding used for downlink transmission.

According to a third aspect, an embodiment of this application provides a model monitoring method, performed by a network device or a circuit used in a network device. The method includes: The network device sends a reference signal. Further, the network device receives first information and second information, where the first information includes ground truth CSI, the ground truth CSI is obtained based on the reference signal, the second information includes a first CSI report, the first CSI report is obtained based on the ground truth CSI, and the first CSI report is a complete report. The network device further obtains first model monitoring performance based on the first information and the second information.

In a possible implementation, the network device further sends first indication information, where the first indication information indicates to use a complete CSI report to perform model monitoring; or the first indication information indicates user equipment to send a complete CSI report.

In a possible implementation, the network device further receives third information, where the third information includes a second CSI report, the second CSI report is an omitted report, and the second CSI report is obtained based on the reference signal. The network device further obtains second model monitoring performance based on the third information and the ground truth CSI.

In a possible implementation, the network device further receives fourth information, where the fourth information includes a third CSI report, the third CSI report is an omitted report, and the third CSI report is used for CSI feedback.

In a possible implementation, the first information and the second information are reported by using higher layer signaling.

In a possible implementation, the network device further sends fifth information, where the fifth information indicates a first resource, and the first resource is used to transmit a complete CSI report.

In a possible implementation, the user equipment does not expect that CSI omission occurs on a CSI report used for model monitoring, or the user equipment does not expect to omit a CSI report used for model monitoring, or the user equipment does not expect that a resource used to transmit a CSI report used for model monitoring is less than a resource needed for the CSI report used for model monitoring.

In a possible implementation, when a CSI report used for model monitoring is omitted, or when a resource used to transmit the CSI report used for model monitoring is less than a resource needed for the CSI report used for model monitoring, the user equipment sends sixth information to the network device, where the sixth information includes at least one of a size of the CSI report used for model monitoring, a size of an omitted part of the CSI report used for model monitoring, the resource needed for the CSI report used for model monitoring, and a resource needed for the omitted part of the CSI report used for model monitoring.

In this way, the network device may allocate an additional resource for transmitting the CSI report to transmit the complete CSI report.

In a possible implementation, a priority of a CSI report used for model monitoring is higher than a priority of another CSI report, or priorities of report content in a CSI report used for model monitoring are not distinguished, or a priority of a CSI report used for monitoring is the same as a priority of a report used to feed back ground truth CSI, and is higher than a priority of another CSI report.

According to a fourth aspect, an embodiment of this application provides a model monitoring method, performed by a network device or a circuit used in a network device. The method includes: The network device sends a reference signal. Further, the network device receives first information and second information, where the first information includes ground truth CSI, the ground truth CSI is obtained based on the reference signal, the second information includes a first CSI report, the first CSI report is obtained based on the ground truth CSI, and the first CSI report is an omitted report. The network device further obtains first model monitoring performance based on the first information and the second information.

In a possible implementation, the network device further sends second indication information, where the second indication information indicates to use an omitted CSI report to perform model monitoring; or the second indication information indicates user equipment to send an omitted CSI report.

In a possible implementation, the network device further receives third information, where the third information includes a second CSI report, the second CSI report is a complete report, and the second CSI report is obtained based on the reference signal. The network device further obtains second model monitoring performance based on the third information and the ground truth CSI.

In a possible implementation, the network device further receives fourth information, where the fourth information includes a third CSI report, the third CSI report is an omitted report, and the third CSI report is used for CSI feedback.

In a possible implementation, the first information and the second information are reported by using higher layer signaling.

In a possible implementation, a priority of a CSI report used for model monitoring is higher than a priority of another CSI report, or priorities of report content in a CSI report used for model monitoring are not distinguished, or a priority of a CSI report used for monitoring is the same as a priority of a report used to feed back ground truth CSI, and is higher than a priority of another CSI report.

According to a fifth aspect, an embodiment of this application provides a model monitoring method, performed by user equipment or a circuit used in the user equipment. The method includes: The user equipment receives a reference signal. The user equipment further sends first information, where the first information includes a first CSI report, the first CSI report is obtained based on the reference signal, and the first CSI report is a complete report. The user equipment further receives second information, where the second information indicates first recovery CSI, and the first recovery CSI is obtained based on the first CSI report. The user equipment further obtains first model monitoring performance based on ground truth CSI and the first recovery CSI, where the ground truth CSI is obtained based on the reference signal.

In this embodiment of this application, the user equipment sends the first information to a network device, where the first information includes the first CSI report. The first CSI report is the complete report. The network device obtains recovery CSI based on the first CSI report, and sends the recovery CSI to the user equipment. In this way, the user equipment can obtain model monitoring performance based on the ground truth CSI and the recovery CSI. In this manner, the user equipment performs model monitoring by using a complete CSI report, so that impact of CSI omission can be excluded, and performance of a model is monitored.

In a possible implementation, the user equipment further receives first indication information, where the first indication information indicates to use a complete CSI report to perform model monitoring; or the first indication information indicates the user equipment to send a complete CSI report.

In a possible implementation, the user equipment further sends third information, where the third information includes a second CSI report, the second CSI report is an omitted report, and the second CSI report is obtained based on the reference signal. The user equipment further receives fourth information, where the fourth information indicates second recovery CSI, and the second recovery CSI is obtained based on the second CSI report. The user equipment further obtains second model monitoring performance based on the ground truth CSI and the second recovery CSI.

In a possible implementation, the first information is reported by using higher layer signaling.

In a possible implementation, the user equipment further receives sixth information, where the sixth information indicates a first resource, and the first resource is used to transmit a complete CSI report.

In a possible implementation, the user equipment does not expect that CSI omission occurs on a CSI report used for model monitoring, or the user equipment does not expect to omit a CSI report used for model monitoring, or the user equipment does not expect that a resource used to transmit a CSI report used for model monitoring is less than a resource needed for the CSI report used for model monitoring.

In a possible implementation, when a CSI report used for model monitoring is omitted, or when a resource used to transmit the CSI report used for model monitoring is less than a resource needed for the CSI report used for model monitoring, the user equipment sends sixth information to the network device, where the sixth information includes at least one of a size of the CSI report used for model monitoring, a size of an omitted part of the CSI report used for model monitoring, the resource needed for the CSI report used for model monitoring, and a resource needed for the omitted part of the CSI report used for model monitoring.

In this way, the network device may allocate an additional resource for transmitting the CSI report to transmit the complete CSI report.

In a possible implementation, a priority of a CSI report used for model monitoring is higher than a priority of another CSI report, or priorities of report content in a CSI report used for model monitoring are not distinguished, or a priority of a CSI report used for monitoring is the same as a priority of a report used to feed back ground truth CSI, and is higher than a priority of another CSI report.

According to a sixth aspect, an embodiment of this application provides a model monitoring method, performed by user equipment or a circuit used in the user equipment. The method includes: The user equipment receives a reference signal. The user equipment further sends first information, where the first information includes a first CSI report, the first CSI report is obtained based on the reference signal, and the first CSI report is an omitted report. The user equipment further receives second information, where the second information indicates first recovery CSI, and the first recovery CSI is obtained based on the first CSI report. The user equipment further obtains first model monitoring performance based on ground truth CSI and the first recovery CSI, where the ground truth CSI is obtained based on the reference signal.

In this embodiment of this application, the user equipment sends the first information to a network device, where the first information includes the first CSI report. The first CSI report is the omitted report. The network device obtains recovery CSI based on the first CSI report, and sends the recovery CSI to the user equipment. In this way, the user equipment can obtain model monitoring performance based on the ground truth CSI and the recovery CSI. In this manner, the user equipment performs model monitoring by using an omitted CSI report, so that robustness of a model for CSI omission can be monitored.

In a possible implementation, the user equipment further receives second indication information, where the second indication information indicates to use an omitted CSI report to perform model monitoring; or the second indication information indicates the user equipment to send an omitted CSI report.

In a possible implementation, the user equipment further sends third information, where the third information includes a second CSI report, the second CSI report is a complete report, and the second CSI report is obtained based on the reference signal. The user equipment further receives fourth information, where the fourth information indicates second recovery CSI, and the second recovery CSI is obtained based on the second CSI report. The user equipment further obtains second model monitoring performance based on the ground truth CSI and the second recovery CSI.

In a possible implementation, the user equipment further sends fifth information, where the fifth information includes a third CSI report, the third CSI report is an omitted report, and the third CSI report is used for CSI feedback.

In a possible implementation, the first information is reported by using higher layer signaling.

In a possible implementation, a priority of a CSI report used for model monitoring is higher than a priority of another CSI report, or priorities of report content in a CSI report used for model monitoring are not distinguished, or a priority of a CSI report used for monitoring is the same as a priority of a report used to feed back ground truth CSI, and is higher than a priority of another CSI report.

According to a seventh aspect, an embodiment of this application provides a model monitoring method, performed by a network device or a circuit used in the network device. The method includes: The network device sends a reference signal. The network device further receives first information, where the first information includes a first CSI report, the first CSI report is obtained based on the reference signal, and the first CSI report is a complete report. The network device further sends second information, where the second information indicates first recovery CSI, and the first recovery CSI is obtained based on the first CSI report.

In a possible implementation, the network device further sends first indication information, where the first indication information indicates to use a complete CSI report to perform model monitoring; or the first indication information indicates user equipment to send a complete CSI report.

In a possible implementation, the network device further receives third information, where the third information includes a second CSI report, the second CSI report is an omitted report, and the second CSI report is obtained based on the reference signal. The network device further sends fourth information, where the fourth information indicates second recovery CSI, and the second recovery CSI is obtained based on the second CSI report.

In a possible implementation, the first information is reported by using higher layer signaling.

In a possible implementation, the network device further sends sixth information, where the sixth information indicates a first resource, and the first resource is used to transmit a complete CSI report.

In a possible implementation, the user equipment does not expect that CSI omission occurs on a CSI report used for model monitoring, or the user equipment does not expect to omit a CSI report used for model monitoring, or the user equipment does not expect that a resource used to transmit a CSI report used for model monitoring is less than a resource needed for the CSI report used for model monitoring.

In a possible implementation, when a CSI report used for model monitoring is omitted, or when a resource used to transmit the CSI report used for model monitoring is less than a resource needed for the CSI report used for model monitoring, the user equipment sends sixth information to the network device, where the sixth information includes at least one of a size of the CSI report used for model monitoring, a size of an omitted part of the CSI report used for model monitoring, the resource needed for the CSI report used for model monitoring, and a resource needed for the omitted part of the CSI report used for model monitoring.

In this way, the network device may allocate an additional resource for transmitting the CSI report to transmit the complete CSI report.

In a possible implementation, a priority of a CSI report used for model monitoring is higher than a priority of another CSI report, or priorities of report content in a CSI report used for model monitoring are not distinguished, or a priority of a CSI report used for monitoring is the same as a priority of a report used to feed back ground truth CSI, and is higher than a priority of another CSI report.

According to an eighth aspect, an embodiment of this application provides a model monitoring method, performed by a network device or a circuit used in the network device. The method includes: The network device sends a reference signal. The network device further receives first information, where the first information includes a first CSI report, the first CSI report is obtained based on the reference signal, and the first CSI report is an omitted report. The network device further sends second information, where the second information indicates first recovery CSI, and the first recovery CSI is obtained based on the first CSI report.

In a possible implementation, the network device further sends second indication information, where the second indication information indicates to use an omitted CSI report to perform model monitoring; or the second indication information indicates user equipment to send an omitted CSI report.

In a possible implementation, the network device further receives third information, where the third information includes a second CSI report, the second CSI report is a complete report, and the second CSI report is obtained based on the reference signal. The network device further sends fourth information, where the fourth information indicates second recovery CSI, and the second recovery CSI is obtained based on the second CSI report.

In a possible implementation, the network device further receives fifth information, where the fifth information includes a third CSI report, the third CSI report is an omitted report, and the third CSI report is used for CSI feedback.

In a possible implementation, the first information is reported by using higher layer signaling.

In a possible implementation, a priority of the first CSI report is higher than a priority of the third CSI report, or priorities of report content in the first CSI report are not distinguished.

According to a ninth aspect, an embodiment of this application provides a model monitoring method, performed by user equipment or a circuit used in the user equipment. The method includes: The user equipment receives a reference signal. The user equipment further obtains ground truth CSI based on the reference signal. The user equipment further obtains first recovery CSI based on a first CSI report, where the first CSI report is obtained based on the ground truth CSI, and the first CSI report is a complete CSI report. The user equipment further obtains first model monitoring performance based on the ground truth CSI and the first recovery CSI.

In this embodiment of this application, the user equipment obtains the ground truth CSI based on the reference signal, and obtains the first CSI report based on the ground truth CSI. The first CSI report is the complete report. The user equipment further obtains recovery CSI based on the first CSI report. In this way, the user equipment can obtain model monitoring performance based on the ground truth CSI and the recovery CSI. In this manner, the user equipment performs model monitoring by using a complete CSI report, so that impact of CSI omission can be excluded, and performance of a model is monitored.

In a possible implementation, the user equipment further receives first indication information, where the first indication information indicates to use a complete CSI report to perform model monitoring; or the first indication information indicates the user equipment to send a complete CSI report.

In a possible implementation, the user equipment further obtains second model monitoring performance based on the ground truth CSI and second recovery CSI, where the second recovery CSI is obtained based on a second CSI report, the second CSI report is an omitted report, and the second CSI report is obtained based on the reference signal.

In a possible implementation, the user equipment further sends first information, where the first information includes a third CSI report, the third CSI report is an omitted report, and the third CSI report is used for CSI feedback.

In a possible implementation, the user equipment further receives sixth information, where the sixth information indicates a first resource, and the first resource is used to transmit a complete CSI report.

According to a tenth aspect, an embodiment of this application provides a model monitoring method, performed by user equipment or a circuit used in the user equipment. The method includes: The user equipment receives a reference signal. The user equipment further obtains ground truth CSI based on the reference signal. The user equipment further obtains first recovery CSI based on a first CSI report, where the first CSI report is obtained based on the ground truth CSI, and the first CSI report is an omitted report. The user equipment further obtains first model monitoring performance based on the ground truth CSI and the first recovery CSI.

In this embodiment of this application, the user equipment obtains the ground truth CSI based on the reference signal, and obtains the first CSI report based on the ground truth CSI. The first CSI report is the omitted report. The user equipment further obtains recovery CSI based on the first CSI report. In this way, the user equipment can obtain model monitoring performance based on the ground truth CSI and the recovery CSI. In this manner, the user equipment performs model monitoring by using an omitted CSI report, so that robustness of a model for CSI omission can be monitored.

In a possible implementation, the user equipment further receives second indication information, where the second indication information indicates to use an omitted CSI report to perform model monitoring; or the second indication information indicates the user equipment to send an omitted CSI report.

In a possible implementation, the user equipment further obtains second model monitoring performance based on the ground truth CSI and second recovery CSI, where the second recovery CSI is obtained based on a second CSI report, the second CSI report is a complete report, and the second CSI report is obtained based on the reference signal.

In a possible implementation, the user equipment further sends first information, where the first information includes a third CSI report, the third CSI report is an omitted report, and the third CSI report is used for CSI feedback.

According to an eleventh aspect, an embodiment of this application provides a model monitoring method, performed by a network device or a circuit used in the network device. The method includes: The network device sends a reference signal. The network device further receives first model monitoring performance, where the first model monitoring performance is obtained based on ground truth CSI and first recovery CSI, the first recovery CSI is obtained based on a first CSI report, the first CSI report is obtained based on the ground truth CSI, the ground truth CSI is obtained based on the reference signal, and the first CSI report is a complete CSI report.

In a possible implementation, the network device further sends first indication information, where the first indication information indicates to use a complete CSI report to perform model monitoring; or the first indication information indicates user equipment to send a complete CSI report.

In a possible implementation, the network device further receives first information, where the first information includes a third CSI report, the third CSI report is an omitted report, and the third CSI report is used for CSI feedback.

According to a twelfth aspect, an embodiment of this application provides a model monitoring method, performed by a network device or a circuit used in the network device. The method includes: The network device sends a reference signal. The network device further receives first model monitoring performance, where the first model monitoring performance is obtained based on ground truth CSI and first recovery CSI, the first recovery CSI is obtained based on a first CSI report, the first CSI report is obtained based on the ground truth CSI, the ground truth CSI is obtained based on the reference signal, and the first CSI report is an omitted report.

In a possible implementation, the network device further sends second indication information, where the second indication information indicates to use an omitted CSI report to perform model monitoring; or the second indication information indicates user equipment to send an omitted CSI report.

In a possible implementation, the network device further receives first information, where the first information includes a third CSI report, the third CSI report is an omitted report, and the third CSI report is used for CSI feedback.

According to a thirteenth aspect, an embodiment of this application provides a model monitoring method, performed by user equipment or a circuit used in the user equipment. The method includes: The user equipment receives a reference signal. The user equipment obtains predicted CSI based on the reference signal. The user equipment obtains, based on the reference signal, ground truth CSI corresponding to the predicted CSI. The user equipment further obtains model monitoring performance based on a first CSI report and the ground truth CSI corresponding to the predicted CSI. The first CSI report is an omitted report, and the first CSI report is obtained based on the predicted CSI.

In this embodiment of this application, the user equipment obtains the predicted CSI and the ground truth CSI based on the reference signal, so that the user equipment obtains the model monitoring performance based on the first CSI report and the ground truth CSI corresponding to the predicted CSI. The first CSI report is the omitted report, and the first CSI report is obtained based on the predicted CSI. In this way, the user equipment may monitor actual performance corresponding to an omitted CSI report reported by the user equipment, instead of directly performing model monitoring by using predicted CSI. In this way, impact of CSI omission can be considered for the monitored performance.

The predicted CSI is CSI that is at a future moment and that is predicted based on current CSI and/or past CSI. In a possible implementation, the user equipment measures downlink reference signal to obtain ground truth CSI 1, and then performs CSI prediction based on the ground truth CSI 1, to obtain the predicted CSI. Alternatively, the user equipment separately measures downlink reference signals at a moment t1 and a moment t2, to obtain ground truth CSI 1 and ground truth CSI 2. The user equipment obtains the predicted CSI based on the ground truth CSI 1 and the ground truth CSI 2. Certainly, the user equipment may further perform prediction or the like based on at least three pieces of ground truth CSI.

The first CSI report indicates CSI feedback corresponding to the predicted CSI, and the CSI feedback is CSI represented by a CSI report that corresponds to the predicted CSI and on which omission is performed. For example, the CSI feedback CSI 3" is a precoding matrix, and the first CSI report includes the CSI 3" or a compressed representation of the CSI 3". For another example, the CSI 3" is a channel response, and the first CSI report includes a precoding matrix corresponding to the CSI 3" or a compressed representation of the precoding matrix.

In a possible implementation, the user equipment sends the first CSI report to a network device, so that the network device determines downlink precoding based on the predicted CSI.

According to a fourteenth aspect, this application provides a model monitoring apparatus, including a processor and a memory. The memory is configured to store program code, and the processor is configured to invoke the program code, to perform the method provided in any one of the first aspect to the thirteenth aspect and the possible implementations of the first aspect to the thirteenth aspect.

According to a fifteenth aspect, this application provides a model monitoring apparatus, including a transceiver module and a processing module. The transceiver module and the processing module are respectively configured to perform the method correspondingly provided in any one of the first aspect to the thirteenth aspect and the possible implementations of the first aspect to the thirteenth aspect.

According to a sixteenth aspect, this application provides a model monitoring system. The system includes a model monitoring apparatus for the method according to the first aspect/the second aspect and a model monitoring apparatus for the method according to the third aspect/the fourth aspect; or the system includes a model monitoring apparatus for the method according to the fifth aspect/the sixth aspect and a model monitoring apparatus for the method according to the seventh aspect/the eighth aspect; or the system includes a model monitoring apparatus for the method according to the ninth aspect/the tenth aspect and a model monitoring apparatus for the method according to the eleventh aspect/the twelfth aspect.

According to a seventeenth aspect, this application provides a computer-readable storage medium. The computer-readable storage medium stores a computer program, and the computer program is executed by a processor to implement the method provided in any one of the first aspect to the thirteenth aspect and the possible implementations of the first aspect to the thirteenth aspect.

According to an eighteenth aspect, this application provides a computer program product. When the computer program product runs on a computer, the computer is caused to perform the method provided in any one of the first aspect to the thirteenth aspect and the possible implementations of the first aspect to the thirteenth aspect.

According to a nineteenth aspect, this application further provides a chip or a chip system, configured to implement the method provided in any one of the first aspect to the thirteenth aspect and the possible implementations of the first aspect to the thirteenth aspect.

It may be understood that the method, the apparatus, the computer-readable storage medium, the computer program product, the chip, or the chip system provided above is configured to perform the foregoing method. Therefore, for beneficial effects that can be achieved, refer to the beneficial effects in the corresponding method. Details are not described herein again.

### BRIEF DESCRIPTION OF DRAWINGS

The following describes accompanying drawings used in embodiments of this application.
FIG. 1 is a simplified diagram of a wireless communication system according to an embodiment of this application;
FIG. 2a is a diagram of a communication system according to an embodiment of this application;
FIG. 2b is a diagram of another communication system according to an embodiment of this application;
FIG. 3a is a diagram of a possible application framework in a communication system according to an embodiment of this application;
FIG. 3b is a diagram of another possible application framework in a communication system according to an embodiment of this application;
FIG. 4 is a diagram of an encoder and a decoder according to an embodiment of this application;
FIG. 5 is a diagram of an AI application framework according to an embodiment of this application;
FIG. 6 is a schematic flowchart of a model monitoring method according to an embodiment of this application;
FIG. 7 is a schematic flowchart of another model monitoring method according to an embodiment of this application;
FIG. 8 is a schematic flowchart of still another model monitoring method according to an embodiment of this application;
FIG. 9 is a schematic flowchart of a model monitoring method according to an embodiment of this application;
FIG. 10 is a schematic flowchart of another model monitoring method according to an embodiment of this application;
FIG. 11 is a schematic flowchart of still another model monitoring method according to an embodiment of this application;
FIG. 12 is a diagram of another communication according to an embodiment of this application;
FIG. 13 is a diagram of a structure of a model monitoring apparatus according to an embodiment of this application;
FIG. 14 is a diagram of a structure of another model monitoring apparatus according to an embodiment of this application; and
FIG. 15 is a diagram of a structure of another model monitoring apparatus according to an embodiment of this application.

### DESCRIPTION OF EMBODIMENTS

To make objectives, technical solutions, and advantages of this disclosure clearer, the following further describes this disclosure in detail with reference to accompanying drawings.

"At least one" in this disclosure below indicates one piece (item) or a plurality of pieces (items). A plurality of pieces (items) mean two or more pieces (items). The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that although terms such as first and second may be used in this disclosure to describe objects, these objects are not limited by these terms. The terms are merely used for distinguishing the objects from each other.

The terms "include", "have", and any variations thereof mentioned in descriptions of this disclosure below are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in this disclosure, terms such as "example" or "for example" are used to represent giving an example, an illustration, or a description. Any method or design solution described by "example" or "for example" in this disclosure should not be construed as being more preferred or having more advantages than another method or design solution. Exactly, use of the terms such as "example" or "for example" is intended to present a related concept in a specific manner.

It should be noted that, in this application, "sending" may be understood as "outputting", and "receiving" may be understood as "inputting". In "sending information to A", "to A" indicates only a direction of information transmission, A is a destination, and "sending information to A" is not necessarily directly performed over an air interface. "Sending information to A" includes directly sending the information to A, or includes indirectly sending the information to A through a transmitter. Therefore, "sending information to A" can also be understood as "outputting information destined for A". Likewise, "receiving information from A" indicates that a source of the information is A, and includes directly receiving the information from A, or includes indirectly receiving the information from A through a receiver. Therefore, "receiving information from A" can also be understood as "inputting information from A".

It may be understood that, in this application, an "indication" may include a direct indication, an indirect indication, an explicit indication, and an implicit indication. When a piece of indication information is described as indicating A, it may be understood as that the indication information carries A, directly indicates A, or indirectly indicates A. In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated, or a manner in which the to-be-indicated information may be indirectly indicated by indicating other information. There is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device.

The technical solutions provided in this disclosure may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system, for example, a 6th generation (6th generation, 6G) mobile communication system, or a system integrating a plurality of systems. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), and internet of things (internet of things, IoT) communication systems, or other communication systems.

A device in the communication system may send a signal to another device or receive a signal from another device. The signal may include information, signaling, data, or the like. The device may be replaced with an entity, a network entity, a network element, a communication device, a communication module, a node, a communication node, or the like. In this disclosure, the device is used as an example for description. For example, the communication system may include at least one terminal device and at least one access network device. The access network device may send a downlink signal to the terminal device, and/or the terminal device may send an uplink signal to the access network device. In addition, it may be understood that if the communication system includes a plurality of terminal devices, the plurality of terminal devices may send signals to each other. In other words, both a signal sending device and a signal receiving device may be terminal devices.

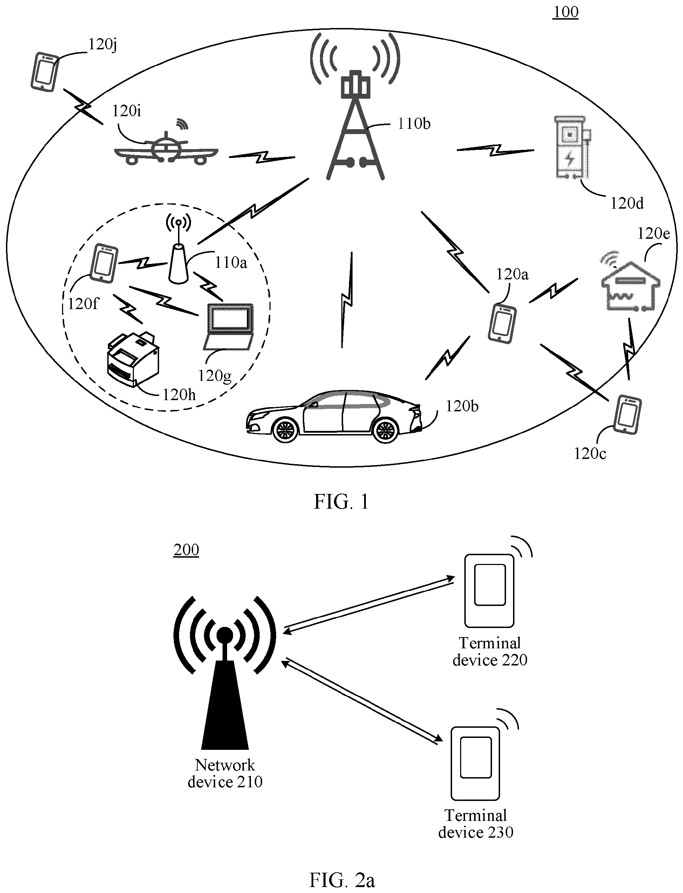

A model monitoring method provided in embodiments of this application may be applied to a wireless communication system, for example, a 5G system, a 6G system, or a satellite communication system. FIG. 1 is a simplified diagram of a wireless communication system according to an embodiment of this application. As shown in FIG. 1, the wireless communication system includes a radio access network 100. The radio access network 100 may be a next generation (for example, 6G or a higher version) radio access network, or a conventional (for example, 5G, 4G, 3G, or 2G) radio access network. One or more communication devices (120a to 120j, which are collectively referred to as 120) may be interconnected or connected to one or more network devices (110a and 110b, which are collectively referred to as 110) in the radio access network 100. Optionally, FIG. 1 is merely a diagram. The wireless communication system may further include another device, for example, may further include a core network device, a wireless relay device, and/or a wireless backhaul device, which are not shown in FIG. 1.

Optionally, during actual application, the wireless communication system may include a plurality of network devices (also referred to as access network devices), or may include a plurality of communication devices. One network device may simultaneously serve one or more communication devices. One communication device may also simultaneously access one or more network devices. Quantities of communication devices and network devices included in the wireless communication system are not limited in this embodiment of this application.

The network device may be an entity that is configured to transmit or receive a signal on a network side. The network device may be an access device via which the communication device accesses the wireless communication system in a wireless manner. For example, the network device may be a base station. The base station may broadly cover various names in the following, or may be replaced with the following names, for example, a NodeB (NodeB), an evolved NodeB (evolved NodeB, eNB), a next generation NodeB (next generation NodeB, gNB), an access network device in an open radio access network (open radio access network, O-RAN), a relay station, an access point, a transmitting and receiving point (transmitting and receiving point, TRP), a transmitting point (transmitting point, TP), a master eNodeB (Master eNodeB, MeNB), a secondary eNodeB (Secondary eNodeB, SeNB), a multi-standard radio (Multi-standard radio, MSR) node, a home base station, a network controller, an access node, a radio node, an access point (AP), a transmission node, a transceiver node, a baseband unit (baseband unit, BBU), a remote radio unit (remote radio unit, RRU), an active antenna unit (Active antenna unit, AAU), a remote radio head (Remote Radio Head, RRH), a central unit (central unit, CU), a distribution unit (distributed unit, DU), a radio unit (radio unit, RU), a central unit control plane (CU control plane, CU-CP) node, a central unit user plane (CU user plane, CU-UP) node, and a positioning node. The base station may be a macro base station, a micro base station, a relay node, a donor node, or the like, or a combination thereof. Alternatively, the network device may be a communication module, a modem, or a chip that is disposed in the foregoing device or apparatus. Alternatively, the network device may be a mobile switching center, a device that takes on a base station function in device-to-device (Device-to-Device, D2D) communication, vehicle-to-everything (vehicle-to-everything, V2X) communication, or machine-to-machine (machine-to-machine, M2M) communication, a network side device in a 6G network, a device that takes on a base station function in a future communication system, or the like. The network device may support networks using a same access technology or different access technologies. A specific technology and a specific device form used by the network device are not limited in embodiments of this application.

The network device may be fixed or mobile. For example, the base stations 110a and 110b are stationary and are used in wireless transmission and reception in one or more cells from the communication device 120. A helicopter or an uncrewed aerial vehicle 120i shown in FIG. 1 may be configured to serve as a mobile base station, and one or more cells may move based on a location of the mobile base station 120i. In other examples, the helicopter or the uncrewed aerial vehicle (120i) may be configured to serve as a communication device communicating with the base station 110b.

In this disclosure, a communication apparatus configured to implement functions of the access network may be an access network device, may be a network device having some functions of the access network, or may be an apparatus that can support implementation of functions of the access network, for example, a chip system, a hardware circuit, a software module, or a combination of the hardware circuit and the software module. The apparatus may be mounted in the access network device or used together with the access network device. In the method disclosed in this disclosure, description is given by using an example in which the communication apparatus configured to implement functions of the access network device is the access network device.

The communication device may be an entity, for example, a mobile phone, configured to receive or transmit a signal on a user side. The communication device may be configured to connect a person, an object, and a machine. The communication device may communicate with one or more core networks via the network device. The communication device includes a handheld device having a wireless connection function, another processing device connected to a wireless modem, a vehicle-mounted device, or the like. The communication device may be a portable, pocket-sized, handheld, computer built-in, or vehicle-mounted mobile apparatus. The communication device 120 may be widely used in various scenarios, for example, cellular communication, device-to-device D2D, vehicle-to-all V2X, peer-to-peer (peer-to-peer, P2P), machine-to-machine M2M, machine type communication MTC, internet of things IoT, virtual reality (virtual reality, VR), augmented reality (augmented reality, AR), industrial control, autonomous driving, telemedicine, a smart grid, smart furniture, smart office, smart wearable, smart transportation, a smart city, an uncrewed aerial vehicle, a robot, remote sensing, passive sensing, positioning, navigation and tracking, and autonomous delivery and mobility. Some examples of the communication device 120 are 3GPP standard user equipment (user equipment, UE), a stationary device, a mobile device, a handheld device, a wearable device, a cellular phone, a smartphone, a session initiation protocol (session initiation protocol, SIP) phone, a notebook computer, a personal computer, a smart book, a vehicle, a satellite, a global positioning system (global positioning system, GPS) device, a target tracking device, an uncrewed aerial vehicle, a helicopter, an aircraft, a ship, a remote management device, a smart home device, an industrial device, a personal communication service (personal communication service, PCS) phone, a wireless local loop (wireless local loop, WLL) station, a personal digital assistant (personal digital assistant, PDA), a wireless network camera, a tablet computer, a palmtop computer, a mobile internet device (mobile internet device, MID), a wearable device such as a smartwatch, a virtual reality VR device, an augmented reality AR device, a wireless terminal in industrial control (industrial control), a terminal in an internet of vehicles system, a wireless terminal in self-driving (self-driving), a wireless terminal in a smart grid (smart grid), a wireless terminal in transportation safety (transportation safety), a wireless terminal in a smart city (smart city), for example, a smart fuel dispenser, a terminal device on a high-speed train, and a wireless terminal in a smart home (smart home), for example, a smart speaker, a smart coffee machine, or a smart printer. The communication device 120 may be a wireless device in the foregoing various scenarios or an apparatus disposed in a wireless device, for example, a communication module, a modem, or a chip in the foregoing device. The communication device may also be referred to as a terminal, a terminal device, user equipment UE, a mobile station (mobile station, MS), a mobile terminal (mobile terminal, MT), or the like. The communication device may alternatively be a communication device in a future wireless communication system. The communication device may be used in a dedicated network device or a general-purpose device. A specific technology and a specific device form used by the communication device are not limited in embodiments of this application.

Optionally, the communication device may be configured to serve as a base station. For example, the UE may serve as a scheduling entity that provides sidelink signals between UE in V2X, D2D, P2P, or the like. As shown in FIG. 1, a cellular phone 120a and a car 120b communicate with each other by using sidelink signals. The cellular phone 120a communicates with a smart home device 120e without relaying a communication signal via the base station 110b.

In this disclosure, a communication apparatus configured to implement functions of the communication device may be a terminal device, may be a terminal device having some functions of the communication device, or may be an apparatus that can support implementation of functions of the communication device, for example, a chip system. The apparatus may be mounted in the terminal device or used together with the terminal device. In this disclosure, the chip system may include a chip, or may include a chip and another discrete component. In the technical solutions provided in this disclosure, an example in which the communication apparatus is the terminal device or the UE is used for description.

Optionally, the wireless communication system usually includes a cell, the base station provides cell management, and the base station provides a communication service for a plurality of mobile stations (mobile stations, MSs) in the cell. The base station includes a baseband unit (baseband unit, BBU) and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components at a same rack. Optionally, one cell may correspond to one carrier or component carrier.

It may be understood that this disclosure may be applied between a network device and a communication device, between network devices, or between communication devices, that is, between a primary device and a secondary device. The primary device may be a network device or a communication device. When the primary device is a network device, the secondary device may be another network device or a communication device. When the primary device is a communication device, the secondary device may be another communication device.

The following describes the solutions by using an example in which the primary device is a network device, for example, an access network device, and the secondary device is a communication device, for example, a terminal device. A communication direction corresponding to downlink is sending from the primary device to the secondary device, and a communication direction corresponding to uplink is sending from the secondary device to the primary device.

### Protocol layer structure between an access network device and a terminal device

Communication between the access network device and the terminal device complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a medium access control (medium access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the access network device and the terminal may further include an artificial intelligence (artificial intelligence, AI) layer, used to transmit data related to an AI function.

Data transmission between the access network device and the terminal device is used as an example. The data transmission needs to pass through a user plane protocol layer, for example, the SDAP layer, the PDCP layer, the RLC layer, the MAC layer, or the physical layer. The SDAP layer, the PDCP layer, the RLC layer, the MAC layer, and the physical layer may also be collectively referred to as an access stratum. Because a data transmission direction includes sending or receiving, each layer is further divided into a sending part and a receiving part. Downlink data transmission is used as an example. After obtaining data from an upper layer, the PDCP layer transmits the data to the RLC layer and the MAC layer. Then, the MAC layer generates a transport block, and subsequently wireless transmission is performed through the physical layer. Data is correspondingly encapsulated at each layer. For example, data received by a layer from an upper layer of the layer is considered as a service data unit (service data unit, SDU) of the layer, encapsulated by the layer into a protocol data unit (protocol data unit, PDU), and then transferred to a next layer.

For example, the terminal device may further have an application layer and a non-access stratum. The application layer may be configured to provide a service for an application installed on the terminal device. For example, downlink data received by the terminal device may be sequentially transmitted from the physical layer to the application layer, and then is provided by the application layer for the application. For another example, the application layer may obtain data generated by the application, sequentially transmit the data to the physical layer, and send the data to another communication apparatus. The non-access stratum may be configured to forward user data. For example, the non-access stratum forwards uplink data received from the application layer to the SDAP layer, or forwards downlink data received from the SDAP layer to the application layer.

### Structure of an access network device

The access network device may include a central unit (central unit, CU) and a distributed unit (distributed unit, DU). A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F1-U. The CU and the DU may be divided based on a protocol layer of a wireless network. For example, functions of a PDCP layer and a protocol layer above the PDCP layer are set on the CU, and functions of a protocol layer (for example, an RLC layer and a MAC layer) below the PDCP layer are set on the DU. For another example, functions of a protocol layer above a PDCP layer are set on the CU, and functions of the PDCP layer and a protocol layer below the PDCP layer are set on the DU.

It may be understood that processing function division of the CU and the DU based on the protocol layers is merely an example, and there may be other division. For example, the CU or the DU may be divided into functions having more protocol layers. For another example, the CU or the DU may be further divided into some processing functions having protocol layers. In a design, a part of functions of the RLC layer and functions of a protocol layer above the RLC layer are set on the CU, and remaining functions of the RLC layer and functions of a protocol layer below the RLC layer are set on the DU. In another design, division of functions of the CU or the DU may alternatively be performed based on service types or other system requirements. For example, division may be performed based on latencies. Functions whose processing time needs to meet a delay requirement are set on the DU, and functions whose processing time does not need to meet the delay requirement are set on the CU. In another design, the CU may alternatively have one or more functions of a core network. For example, the CU may be disposed on a network side to facilitate centralized management. In another design, an RU of the DU is disposed remotely. The RU has a radio frequency function.

Optionally, the DU and the RU may be distinguished at a physical layer (physical layer, PHY). For example, the DU may implement higher-layer functions of the PHY layer, and the RU may implement lower-layer functions of the PHY layer. When used for sending, a function of the PHY layer may include a cyclic redundancy check (cyclic redundancy check, CRC) code addition, channel coding, rate matching, scrambling, modulation, layer mapping, precoding, resource mapping, physical antenna mapping, and/or a radio frequency sending function. When used for reception, a function of the PHY layer may include CRC, channel decoding, rate de-matching, descrambling, demodulation, layer de-mapping, channel detection, resource de-mapping, physical antenna de-mapping, and/or a radio frequency receiving function. The higher-layer function of the PHY layer may include some functions of the PHY layer, for example, the some functions are closer to the MAC layer. The lower-layer function of the PHY layer may include some other functions of the PHY layer, for example, the some functions are closer to the radio frequency function. For example, the higher-layer functions of the PHY layer may include CRC code addition, channel encoding, rate matching, scrambling, modulation, and layer mapping, and the lower-layer functions of the PHY layer may include precoding, resource mapping, physical antenna mapping, and radio frequency sending function. Alternatively, the higher-layer functions of the PHY layer may include CRC code addition, channel encoding, rate matching, scrambling, modulation, layer mapping, and precoding. The lower-layer functions of the PHY layer may include resource mapping, physical antenna mapping, and radio frequency sending function.

For example, functions of the CU may be implemented by one entity, or may be implemented by different entities. For example, the functions of the CU may be further divided. To be specific, a control plane and a user plane are separated and implemented by different entities, which are respectively a CU control plane entity (namely, a CU-CP entity) and a CU user plane entity (namely, a CU-UP entity). The CU-CP entity and the CU-UP entity may be coupled to the DU to jointly complete functions of the access network device.

In the foregoing architecture, signaling generated by the CU may be sent to a terminal device via the DU, or signaling generated by the terminal device may be sent to the CU via the DU. For example, signaling at an RRC layer or the PDCP layer is finally processed into signaling at the physical layer and sent to the terminal device, or is converted from signaling received from the physical layer. Based on such architectures, the signaling at the RRC layer or PDCP layer may be considered to be sent via the DU, or sent via the DU and the RU.

Optionally, any one of the DU, the CU, the CU-CP, the CU-UP, and the RU may be a software module, a hardware structure, or a combination thereof. This is not limited. Different entities may exist in different forms. This is not limited. For example, the DU, the CU, the CU-CP, and the CU-UP are software modules, and the RU is a hardware structure. These modules and methods performed by the modules also fall within the protection scope of this disclosure.

The access network device may support one or more types of fronthaul interfaces, and different fronthaul interfaces correspond to DUs and RUs that have different functions. If a fronthaul interface between a DU and an RU is a common public radio interface (common public radio interface, CPRI), the DU is configured to implement one or more baseband functions, and the RU is configured to implement one or more radio frequency functions. If the fronthaul interface between the DU and the RU is another type of interface, in comparison with the CPRI, in the fronthaul interface, a part of downlink and/or uplink baseband functions is moved for implementation. For example, for downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation; and for uplink, one or more of digital beamforming (beamforming, BF) or fast Fourier transform (fast Fourier transform, FFT)/cyclic prefix (cyclic prefix, CP) removal are moved from the DU to the RU for implementation. In a possible implementation, the interface may be an enhanced common public radio interface (enhanced common public radio interface, eCPRI). In an eCPRI architecture, different split modes between the DU and the RU correspond to different categories (categories, Cats) of eCPRIs, for example, eCPRI Cats A, B, C, D, E, and F.

The eCPRI Cat A is used as an example. For downlink transmission, splitting is performed at layer mapping. The DU is configured to implement the layer mapping and one or more functions (namely, one or more of encoding, rate matching, scrambling, modulation, and the layer mapping) before the layer mapping, and other functions (for example, one or more of resource element (resource element, RE) mapping, digital beamforming (beamforming, BF) after the layer mapping, or inverse fast Fourier transform (inverse fast Fourier transform, IFFT)/cyclic prefix (cyclic prefix, CP) addition) are moved to the RU for implementation. For uplink transmission, splitting is performed at RE demapping. The DU is configured to implement the demapping and one or more functions (namely, one or more functions of decoding, rate de-matching, descrambling, demodulation, inverse discrete Fourier transform (inverse discrete Fourier transform, IDFT), channel equalization, or RE demapping) before the demapping, and other functions (for example, one or more of digital BF or fast Fourier transform (fast Fourier transform, FFT)/CP removal) after the demapping are moved to the RU for implementation. It may be understood that, for function descriptions of DUs and RUs corresponding to various categories of eCPRIs, refer to the eCPRI protocol. Details are not described herein.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the CU (or the CU-CP and the CU-UP), the DU, or the RU may alternatively have different names, but a person skilled in the art may understand meanings thereof. For example, in an open radio access network (open RAN, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination thereof.

In embodiments of this application, an apparatus configured to implement a function of a network device may be a network device, or may be an apparatus that can support the network device in implementing the function, for example, a chip system, a hardware circuit, a software module, or a combination of the hardware circuit and the software module. The apparatus can be mounted in the network device, or can match the network device for use. In embodiments of this application, only an example in which the apparatus for implementing the function of the network device is a network device is used for description, and constitutes no limitation on the solutions in embodiments of this application.

The network device and/or the terminal device may be deployed on land, including an indoor device, an outdoor device, a handheld device, or a vehicle-mounted device; may be deployed on water; or may be deployed on an airplane, a balloon, and a satellite in the air. A scenario in which the network device and the terminal device are located is not limited in embodiments of this application. In addition, the terminal device and the network device may be hardware devices; or may be software functions running on dedicated hardware or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

It should be understood that a quantity and types of devices in the communication system shown in FIG. 1 are merely used as an example, and this disclosure is not limited thereto. In actual application, the communication system may further include more terminal devices and more access network devices, and may further include another network element, for example, may include a core network device and/or a network element configured to implement an artificial intelligence function. A network element configured to implement an artificial intelligence function may be a RAN intelligent controller (RAN intelligent controller, RIC). FIG. 2a is a diagram of a communication system applicable to an embodiment of this application. As shown in FIG. 2a, the communication system 200 may include at least one network device, for example, a network device 210 shown in FIG. 2a. The communication system 200 may further include at least one terminal device, for example, a terminal device 220 and a terminal device 230 shown in FIG. 2a. The network device 210 may communicate with the terminal device (for example, the terminal device 220 and the terminal device 230) through a radio link. Communication devices, for example, the network device 210 and the terminal device 220, in the communication system may communicate with each other using a multi-antenna technology.

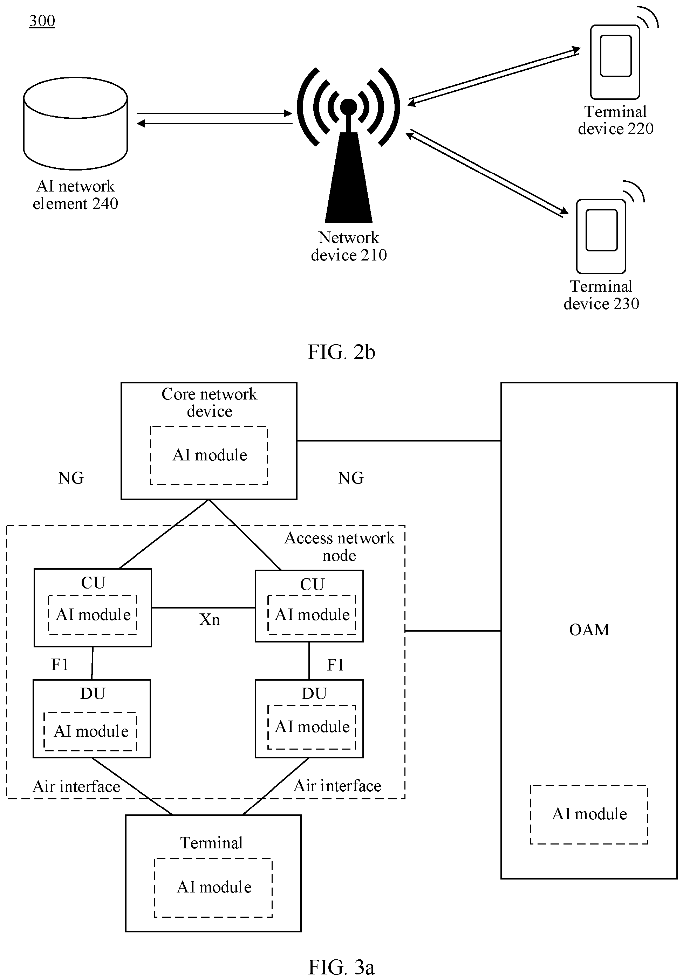

FIG. 2b is a diagram of another communication system applicable to an embodiment of this application. Compared with the communication system 200 shown in FIG. 2a, the communication system 300 shown in FIG. 2b further includes an AI network element 240. The AI network element 240 is configured to perform an AI-related operation, for example, construct a training dataset or train an AI model.

In a possible implementation, the network device 210 may send data related to training of the AI model to the AI network element 240, and the AI network element 240 constructs the training dataset and trains the AI model. For example, the data related to the training of the AI model may include data reported by a terminal device. The AI network element 240 may send a result of an operation related to the AI model to the network device 210, and the network device 210 forwards the result of the operation related to the AI model to the terminal device. For example, the result of the operation related to the AI model may include at least one of the following: a trained AI model, an evaluation result or a test result for the model, or the like. For example, a part of the trained AI model may be deployed on the network device 210, and the other part is deployed on the terminal device. Alternatively, the trained AI model may be deployed on the network device 210. Alternatively, the trained AI model may be deployed on the terminal device.

It should be understood that, in FIG. 2b, an example in which the AI network element 240 is directly connected to the network device 210 is merely used for description. In another scenario, the AI network element 240 may alternatively be connected to the terminal device. Alternatively, the AI network element 240 may be connected to both the network device 210 and the terminal device. Alternatively, the AI network element 240 may be connected to the network device 210 through a third-party network element (also referred to as a third-party device or a third-party entity). A connection relationship between the AI network element and another network element is not limited in embodiments of this application.

The AI network element 240 may alternatively be disposed on a network device and/or a terminal device as a module, for example, disposed on the network device 210 or the terminal device shown in FIG. 2a.

It should be noted that, FIG. 2a and FIG. 2b are merely simplified diagrams of examples for ease of understanding. For example, the communication system may further include another device, for example, may further include a wireless relay device and/or a wireless backhaul device, which are/is not shown in FIG. 2a and FIG. 2b. During actual application, the communication system may include a plurality of network devices, and may also include a plurality of terminal devices. Quantities of network devices and terminal devices included in the communication system are not limited in embodiments of this application.

To support an AI technology in a wireless network, an AI node may be further introduced into the network.

Optionally, the AI node may be deployed at one or more of the following locations in the communication system: an access network device, a terminal device, a core network device, or the like. Alternatively, the AI node may be independently deployed, for example, deployed at a location other than any one of the foregoing devices, for example, a host or a cloud server in an over the top (over the top, OTT) system. The AI node may communicate with another device in the communication system. For example, the another device may be one or more of the following: a network device, a terminal device, a network element of a core network, or the like.

It may be understood that a quantity of AI nodes is not limited in this application. For example, when there are a plurality of AI nodes, the plurality of AI nodes may be divided based on functions. For example, different AI nodes are responsible for different functions.

It may be further understood that, the AI nodes may be independent devices, may be integrated into a same device to implement different functions, may be network elements in a hardware device, may be software functions running on dedicated hardware, or may be virtualized functions instantiated on a platform (for example, a cloud platform). A specific form of the AI node is not limited in this application.

The AI node may be an AI network element or an AI module.

FIG. 3a is a diagram of a possible application framework in a communication system. As shown in FIG. 3a, network elements in the communication system are connected to each other through an interface (for example, NG or Xn) or an air interface. One or more AI modules (for clarity, only one AI module is shown in FIG. 3a) are disposed in one or more devices of these network element nodes, for example, a core network device, an access network (radio access network, RAN) node, a terminal, or an OAM. The access network node may serve as an independent RAN node, or may include a plurality of RAN nodes, for example, include a CU and a DU. One or more AI modules may also be disposed in the CU and/or the DU. Optionally, the CU may be further split into a CU-CP and a CU-UP. One or more AI models are disposed in the CU-CP and/or the CU-UP.

The AI module is configured to implement a corresponding AI function. AI modules deployed in different network elements may be the same or different. A model of the AI module is configured based on different parameters, and the AI module may implement different functions. The model of the AI module may be configured based on one or more of the following parameters: a structure parameter (for example, at least one of the following: a quantity of layers of a neural network, a width of the neural network, a connection relationship between layers, a weight value of a neuron, an activation function of the neuron, or a bias in the activation function), an input parameter (for example, a type of the input parameter and/or a dimension of the input parameter), or an output parameter (for example, a type of the output parameter and/or a dimension of the output parameter). The bias in the activation function may also be referred to as a bias of the neural network.

One AI module may have one or more models. One model may obtain one output through inference, where the output includes one or more parameters. Learning processes, training processes, or inference processes of different models may be deployed in different nodes or devices, or may be deployed in a same node or device.

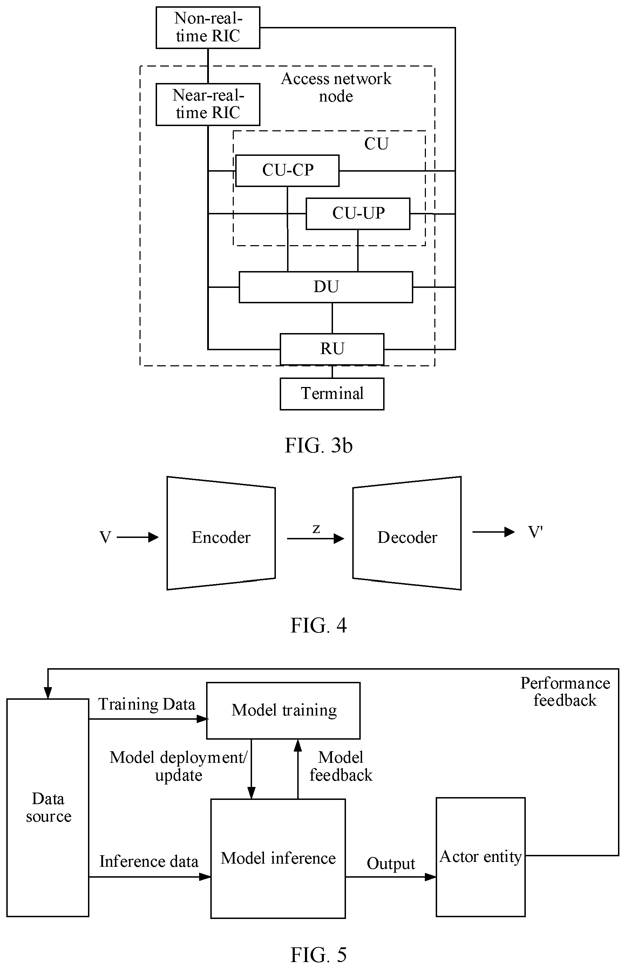

FIG. 3b is a diagram of another possible application framework in a communication system. As shown in FIG. 3b, the communication system includes a RAN intelligent controller (RAN intelligent controller, RIC). For example, the RIC may be the AI module shown in FIG. 3a, and is configured to implement an AI-related function. The RIC includes a near-real-time RIC (near-real-time RIC, near-RT RIC) and a non-real-time RIC (non-real-time RIC, Non-RT RIC). The non-real-time RIC mainly processes non-real-time information, for example, delay-insensitive data. A delay of the data may be at a second level. A real-time RIC mainly processes near-real-time information, for example, delay-sensitive data. A delay of the data is at a level of tens of milliseconds.

The near-real-time RIC is configured to perform model training and inference, for example, is configured to train an AI model and perform inference by using the AI model. The near-real-time RIC may obtain information on a network side and/or a terminal side from a RAN node (for example, a CU, a CU-CP, a CU-UP, a DU, and/or an RU) and/or a terminal. The information may be used as training data or inference data. Optionally, the near-real-time RIC may deliver an inference result to the RAN node and/or the terminal. Optionally, the inference result may be exchanged between the CU and the DU and/or between the DU and the RU. For example, the near-real-time RIC delivers the inference result to the DU, and the DU sends the inference result to the RU.

The non-real-time RIC is also configured to perform model training and inference, for example, is configured to train an AI model and perform inference by using the model. The non-real-time RIC may obtain information on a network side and/or a terminal side from a RAN node (for example, a CU, a CU-CP, a CU-UP, a DU, and/or an RU) and/or a terminal. The information may be used as training data or inference data, and an inference result may be delivered to the RAN node and/or the terminal. Optionally, the inference result may be exchanged between the CU and the DU and/or between the DU and the RU. For example, the non-real-time RIC delivers the inference result to the DU, and the DU sends the inference result to the RU.

The near-real-time RIC and the non-real-time RIC each may alternatively be independently disposed as a network element. Optionally, the near-real-time RIC and the non-real-time RIC may alternatively serve as a part of another device. For example, the near-real-time RIC is disposed in the RAN node (for example, the CU or the DU), and the non-real-time RIC is disposed in an OAM, a server (for example, a cloud server), a core network device, or another network device.

It may be understood that, all or a part of functions implemented by one or more of the terminal device, the access network device, the core network device, or the network element configured to implement the artificial intelligence function may be virtualized, that is, implemented by using one or more of a dedicated processor or a general-purpose processor and a corresponding software module. Because the terminal device and the access network device are related to an air interface transmission interface, a transceiver function of the interface may be implemented by hardware. Core network devices such as an operation, administration, and maintenance (operation, administration, and maintenance, OAM) network element can all be virtualized. Optionally, one or more functions of the virtualized terminal device, access network device, core network device, or network element configured to implement the artificial intelligence function may be implemented by a cloud device, for example, implemented by a cloud device in an over the top (over the top, OTT) system.

The method provided in this disclosure may be used for communication between the access network device and the terminal device, and may also be used for communication between other communication devices, for example, communication between a macro base station and a micro base station in a wireless backhaul link, or communication between two terminal devices in a sidelink (sidelink, SL). This is not limited.

For ease of understanding the solutions in embodiments of this application, the following describes terms that may be used in embodiments of this application.

### (1) AI model:

The AI model is an algorithm or a computer program that can implement an AI function. The AI model represents a mapping relationship between an input and an output of the model. A type of the AI model may be a neural network, a linear regression model, a decision tree model, a support vector machine (support vector machine, SVM), a Bayesian network, a Q-learning model, or another machine learning (machine learning, ML) model.

### (2) Two-side model:

The two-side model may also be referred to as a bilateral model, a cooperative model, a dual model, a two-side (two-side) model, or the like. The two-side model is a model including a plurality of submodels. The plurality of submodels included in the model need to match each other. The plurality of submodels may be deployed on different nodes.

In a possible design, embodiments of this application relate to an encoder configured to compress CSI and a decoder configured to recover compressed CSI. The encoder and the decoder are used in cooperation. It may be understood that the encoder and the decoder are AI models that match each other. One encoder may include one or more AI models, and a decoder matching the encoder also includes one or more AI models. An encoder and a decoder that are used in cooperation include a same quantity of AI models, and AI models included in the encoder are in one-to-one correspondence with AI models included in the decoder.

In a possible design, a set of encoder (encoder) and decoder (decoder) that are used in cooperation may be specifically two parts of a same auto-encoder (auto-encoder, AE), for example, as shown in FIG. 4. An AE model in which an encoder and a decoder are separately deployed on different nodes is a typical bilateral model. The encoder and the decoder of the AE model are usually an encoder and a decoder that are jointly trained and that are used in cooperation. The encoder processes an input V to obtain a processed result z, and the decoder can decode the output z of the encoder into an expected output V'.

The auto-encoder is an unsupervised learning neural network, and is characterized by using input data as label data. Therefore, the auto-encoder may also be understood as a self-supervised learning neural network. The auto-encoder may be configured to compress and recover data. For example, the encoder in the auto-encoder may compress (encode) data A to obtain data B, and the decoder in the auto-encoder may decompress (decode) the data B to obtain the data A through recovery. Alternatively, this may be understood as that the decoder is an inverse operation of the encoder.

For example, the AI model in embodiments of this application may include an encoder and a decoder. The encoder and the decoder are used in cooperation. It may be understood that the encoder and the decoder are AI models that match each other. The encoder and the decoder may be separately deployed on a terminal device and a network device.

Alternatively, the AI model in embodiments of this application may be a single-side model, and the AI model may be deployed on a terminal device or a network device.

### (3) Neural network (neural network, NN):

The neural network is a specific implementation form of AI or machine learning. According to a universal approximation theorem, the neural network can approximate any continuous function in theory, so that the neural network has a capability of learning any mapping.

The neural network may include neurons. The neuron may be an operation unit that uses xs and an intercept of 1 as input. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

For example, a type of an AI model is a neural network. The AI model in this disclosure may be a deep neural network (deep neural network, DNN). Based on network construction modes, the DNN may include a feedforward neural network (feedforward neural network, FNN), a convolutional neural network (convolutional neural network, CNN), a recurrent neural network (recurrent neural network, RNN), and the like.

### (4) Training dataset and inference data:

In the machine learning field, a ground truth (ground truth) is usually considered as accurate data or true data.

The training dataset is used to train an AI model. The training dataset may include an input of the AI model, or include an input and a target output of the AI model. The training dataset includes one or more pieces of training data. The training data may include a training sample input into the AI model, or may include the target output of the AI model. The target output may also be referred to as a label, a sample label, or a label sample. The label is a ground truth.

In the communication field, the training dataset may include simulated data collected by a simulation platform, may include experimental data collected in an experiment scenario, or may include actual measured data collected in an actual communication network. Geographical environments and channel conditions in which data is generated are different. For example, indoor or outdoor environments, moving speeds, frequency bands, or antenna configurations are different. Therefore, collected data may be classified when the data is obtained. For example, data with a same channel propagation environment and a same antenna configuration is classified into one type.

Model training is essentially learning some features of training data from the training data. During training of an AI model (for example, a neural network model), because an output of the AI model is expected to be as close as possible to a value that is actually expected to be predicted, a current predicted value of the network may be compared with a target value that is actually expected, and then a weight vector of each layer of the AI model is updated based on a difference between the two (certainly, an initialization process is usually performed before the first update, that is, a parameter is preconfigured for each layer of the AI model). For example, if the predicted value of the network is larger, the weight vector is adjusted to obtain a smaller predicted value. The weight vector is continuously adjusted until the AI model can predict the target value that is actually expected or a value that is quite close to the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A larger output value (loss) of the loss function indicates a larger difference. In this case, the training of the AI model is a process of minimizing the loss, so that a value of the loss function is less than a threshold, or the value of the loss function meets a target requirement. For example, the AI model is a neural network, and adjusting a model parameter of the neural network includes adjusting at least one of the following parameters: a quantity of layers of the neural network, a width of the neural network, a weight value of a neuron, or a parameter in an activation function of the neuron.

The inference data may be used as an input of a trained AI model for inference by the AI model. During model inference, the inference data may be input into the AI model to obtain corresponding output, namely, an inference result.

### (5) AI model design:

The AI model design mainly includes a data collection phase (for example, collection of training data and/or inference data), a model training phase, and a model inference phase. The AI model design may further include an inference result application phase.

FIG. 5 shows an AI application framework.

In the data collection phase, a data source (data source) is used to provide a training dataset and inference data. In the model training phase, an AI model is obtained through analysis or training by using training data (training data) provided by the data source. The AI model represents a mapping relationship between an input and an output of the model. Obtaining the AI model through learning by using a model training node is equivalent to obtaining the mapping relationship between the input and the output of the model through learning by using the training data. In the model inference phase, the AI model trained in the model training phase is configured to perform inference based on the inference data provided by the data source, to obtain an inference result. This phase may also be understood as inputting the inference data into the AI model to obtain an output by using the AI model. The output is the inference result. The inference result may indicate a configuration parameter used (executed) by an execution object, and/or an operation performed by the execution object. The inference result is released in the inference result application phase. For example, the inference result may be centrally planned by an actor (actor) entity. For example, the actor entity may send the inference result to one or more actor objects (for example, a network device or a terminal device) for execution. For another example, the actor entity may further feed back performance of the model to the data source, to facilitate subsequent update training of the model.

It may be understood that, a communication system may include a network element having an artificial intelligence function. The foregoing phases related to AI model design may be performed by one or more network elements having the artificial intelligence function. In a possible design, the AI function (for example, an AI module or an AI entity) may be configured in an existing network element in the communication system to implement an AI-related operation, for example, AI model training and/or inference. For example, the existing network element may be a network device or a terminal device. Alternatively, in another possible design, an independent network element may be introduced into the communication system to perform an AI-related operation, for example, AI model training. The independent network element may be referred to as an AI network element, an AI node, an AI entity, or the like. The name is not limited in embodiments of this application. For example, the AI network element may be directly connected to a network device in the communication system, or may be indirectly connected to the network device via a third-party network element. The third-party network element may be a core network element such as an authentication management function (authentication management function, AMF) network element or a user plane function (user plane function, UPF) network element, an operation, administration, and maintenance (operation, administration, and maintenance, OAM), a server (for example, a cloud server), an over the top (over the top, OTT) device, or another network element. This is not limited. For example, the independent AI network element, the AI entity, or the AI node may be deployed on one or more of a network device side, a terminal device side, or a core network side. Optionally, the independent AI network element, the AI entity, or the AI node may be deployed on a server, for example, a cloud server, an OTT device, or another device. For example, the AI network element 240 is introduced into the communication system shown in FIG. 2b. It may be understood that the AI module, the AI entity, the AI network element, or the AI node may be configured to perform one or more of AI functions. The AI function may include AI model processing, for example, AI model training and/or update, AI model monitoring, AI model management, for example, AI model registration and/or deregistration, or AI model application inference.

Training processes of different models may be deployed on different devices or nodes, or may be deployed on a same device or node. Inference processes of different models may be deployed on different devices or nodes, or may be deployed on a same device or node. For example, a model training phase is performed by a terminal device. After training an encoder and a decoder that match each other, the terminal device may send a model parameter of the decoder to a network device. For example, a model training phase is performed by a network device. After training an encoder and a decoder that match each other, the network device may indicate a model parameter of the encoder to a terminal device. For example, a model training phase is performed by an independent AI network element. After training an encoder and a decoder that match each other, the AI network element may send a model parameter of the encoder to a terminal device, and send a model parameter of the decoder to a network device. Then a model inference phase corresponding to the encoder is performed on the terminal device, and a model inference phase corresponding to the decoder is performed on the network device.

The model parameter may include one or more of the following: a structure parameter of the model (for example, a quantity of layers of the model and/or a weight value), an input parameter of the model (for example, an input dimension or a quantity of input ports), or an output parameter of the model (for example, an output dimension or a quantity of output ports). It may be understood that, the input dimension may be a size of a piece of input data. For example, when the input data is a sequence, an input dimension corresponding to the sequence may indicate a length of the sequence. The quantity of input ports may be an amount of input data. Similarly, the output dimension may be a size of a piece of output data. For example, when the output data is a sequence, an output dimension corresponding to the sequence may indicate a length of the sequence. The quantity of output ports may be an amount of output data.

### (6) Channel information:

In a communication system (for example, an LTE communication system or an NR communication system), a network device needs to determine, based on channel information, configurations such as a resource, an MCS, and precoding that are used to schedule a downlink data channel for a terminal device. It may be understood that the channel information may also be referred to as channel state information (channel state information, CSI) or channel environment information, and is information that can reflect a channel feature and channel quality. In this application, a meaning of CSI is wider than that of CSI in a conventional solution, and is not limited to a channel quality indicator (channel quality indication, CQI), a precoding matrix indicator (precoding matrix indicator, PMI), a rank indicator (rank indicator, RI), or a CSI-RS resource indicator (CSI-RS resource indicator, CRI). The CSI may also be one or more of channel response information (for example, a channel response matrix), weight value information or precoding information corresponding to a channel response, a matrix including an eigenvector of the channel response, or reference signal received power (reference signal received power, RSRP), a signal to interference plus noise ratio (signal to interference plus noise ratio, SINR) or other information that can represent a channel state.

CSI measurement means that a receive end obtains channel information based on a reference signal sent by a transmit end, that is, estimates the channel information by using a channel estimation method. For example, the reference signal may include one or more of a channel state information reference signal (channel state information reference signal, CSI-RS), a synchronization signal/broadcast channel block (synchronization signal/physical broadcast channel block, SSB), a channel sounding reference signal (sounding reference signal, SRS), a demodulation reference signal (demodulation reference signal, DMRS), and the like. The CSI-RS, the SSB, the DMRS, and the like may be used to measure downlink CSI. The SRS, the DMRS, and the like may be used to measure uplink CSI.

An FDD communication scenario is used as an example. In the FDD communication scenario, an uplink channel and a downlink channel do not have reciprocity, in other words, the reciprocity between the uplink channel and the downlink channel cannot be ensured. Therefore, a network device usually sends a downlink reference signal to a terminal device, and the terminal device performs channel measurement or interference measurement based on the received downlink reference signal to estimate downlink CSI. The terminal device generates a CSI report in a manner predefined in a protocol or in a manner configured by the network device, and feeds back the CSI report to the network device, so that the network device obtains the downlink CSI.

For example, the CSI may include at least one of the following: a channel quality indicator (channel quality indicator, CQI), a precoding matrix indicator (precoding matrix indicator, PMI), a rank indicator (rank indicator, RI), a CSI-RS resource indicator (CSI-RS resource indicator, CRI), a layer indicator (layer indicator, LI), reference signal received power (reference signal received power, RSRP), a signal to interference plus noise ratio (signal to interference plus noise ratio, SINR), and the like. The signal to interference plus noise ratio may also be referred to as a signal-to-interference-plus-noise ratio.

The RI indicates a quantity, recommended by the terminal device, of layers of downlink transmission. The CQI indicates a modulation and coding scheme that is determined by the terminal device and that can be supported in a current channel condition. The PMI indicates precoding recommended by the terminal device. A quantity, indicated by the PMI, of layers of the precoding corresponds to the RI.

It should be understood that, the RI, the CQI, the PMI, and the like that are indicated in the CSI report are merely recommended values of the terminal device. The network device may perform downlink transmission based on a part or all of information indicated in the CSI report. Alternatively, the network device may perform downlink transmission without referring to the information indicated in the CSI report.

An AI technology is introduced into a wireless communication network to obtain an AI model-based CSI feedback mode. The terminal device compresses and feeds back CSI by using an AI model, and the network device recovers compressed CSI by using an AI model. A sequence (for example, a bit sequence) is transmitted in AI-based CSI feedback, and overheads are lower than overheads of CSI in conventional CSI feedback.

FIG. 4 is used as an example. In FIG. 4, an encoder may be a CSI generator, and a decoder may be a CSI reconstructor. The encoder may be deployed on the terminal device, and the decoder may be deployed on the network device. The terminal device may generate CSI feedback information z based on CSI raw information V by using the encoder. The terminal device reports a CSI report, where the CSI report may include the CSI feedback information z. The network device may reconstruct CSI information by using the decoder to obtain CSI recovery information V'.

The CSI raw information V may be obtained by the terminal device through CSI measurement. For example, the CSI raw information V may include a channel response of a downlink channel or an eigenvector matrix (a matrix including eigenvectors) of the downlink channel. The encoder processes the eigenvector matrix of the downlink channel to obtain the CSI feedback information z. In other words, performing a compression operation and/or a quantization operation on an eigenmatrix based on a codebook in a related solution is replaced with the operation of processing the eigenmatrix by the encoder to obtain the CSI feedback information z. The terminal device reports the CSI feedback information z. The network device processes the CSI feedback information z by using the decoder to obtain the CSI recovery information V'.

The following further describes examples of a training process and an inference process for the AI model in embodiments of this application.

Training data for training the AI model includes a training sample and a sample label. For example, the training sample is channel information determined by the terminal device, and the sample label is real channel information, namely, ground truth CSI. When the encoder and the decoder belong to a same auto-encoder, the training data may include only the training sample, in other words, the training sample is the sample label.

In the wireless communication field, the ground truth CSI may be uncompressed CSI, that is, high-precision CSI.

A specific training process is as follows: A model training node processes channel information, namely, the training sample, by using the encoder, to obtain channel feedback information, for example, CSI feedback information; processes the feedback information by using the decoder, to obtain recovered channel information, namely, channel recovery information, for example, CSI recovery information; and then calculates a difference between the channel recovery information and a corresponding sample label, that is, a value of a loss function, and updates parameters of the encoder and the decoder based on the value of the loss function, to minimize the difference between the recovered channel information and the corresponding sample label, that is, minimize the loss function. For example, the loss function may be a minimum mean square error (mean square error, MSE) or a cosine similarity. The foregoing operations may be repeated to obtain an encoder and a decoder that meet a target requirement. The model training node may be the terminal device, the network device, or another network element with an AI function in the communication system.

It should be understood that the foregoing example in which the AI model is used for CSI compression is merely used for description, and during CSI feedback, the AI model may alternatively be used in another scenario. For example, the AI model may be used for CSI prediction, to be specific, predicting channel information at one or more future moments based on channel information measured at one or more historical moments. A specific purpose of the AI model in the CSI feedback scenario is not limited in embodiments of this application.

It should be understood that, in this application, an indication includes a direct indication (also referred to as an explicit indication) and an implicit indication. Directly indicating information A means including the information A. Implicitly indicating the information A means indicating the information A by using a correspondence between the information A and information B and directly indicating the information B. The correspondence between the information A and the information B may be predefined, prestored, pre-burned, or preconfigured.

It should be understood that, in this application, that information C is used to determine information D includes that the information D is determined only based on the information C, and also includes that the information D is determined based on the information C and other information. In addition, that the information C is used to determine the information D may further include an indirect determining case, for example, a case in which the information D is determined based on information E, and the information E is determined based on the information C.

In addition, in embodiments of this application, that "a network element A sends information A to a network element B" may be understood as that a destination end of the information A or an intermediate network element in a transmission path between the network element A and the destination end is the network element B, and may include directly or indirectly sending information to the network element B; and that "a network element B receives information A from a network element A" may be understood as that a source end of the information A or an intermediate network element in a transmission path between the network element B and the source end is the network element A, and may include directly or indirectly receiving information from the network element A. Information may undergo necessary processing, for example, a format change, between a source end for sending the information and a destination end. However, the destination end may understand valid information from the source end. Similar expressions in this application may be understood similarly. Details are not described herein.

The following describes in detail the method in embodiments of this application.

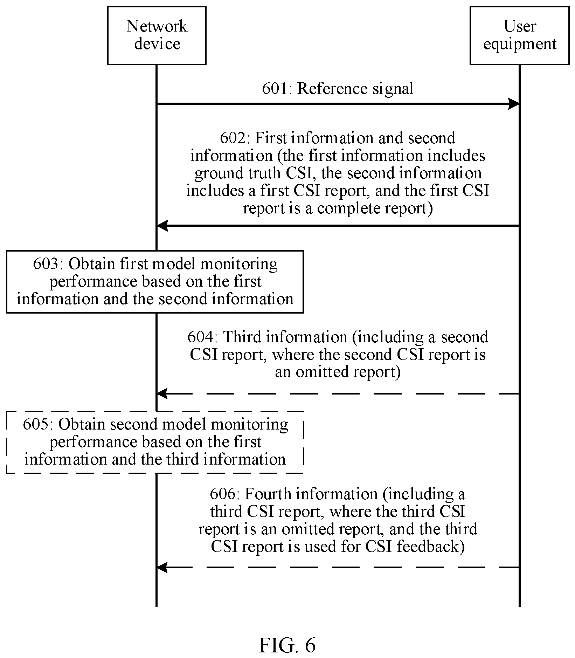

FIG. 6 is a schematic flowchart of a model monitoring method according to an embodiment of this application. Optionally, the method may be applied to the foregoing communication system, for example, the communication system shown in FIG. 1. The model monitoring method shown in FIG. 6 may include step 601 to step 603. It should be understood that, for ease of description in this application, a sequence of 601 to 603 is used for description, but this is not intended to limit execution necessarily performed in the sequence. An execution sequence, execution time, a quantity of execution times, and the like of the foregoing one or more steps are not limited in embodiments of this application. Step 601 to step 603 are specifically as follows.

601: A network device sends a reference signal to user equipment, and correspondingly, the user equipment receives the reference signal.

For example, the reference signal may be a downlink reference signal, for example, a channel state information reference signal CSI-RS.

602: The user equipment sends first information and second information to the network device, where the first information includes ground truth CSI, the ground truth CSI is obtained based on the reference signal, the second information includes a first CSI report, the first CSI report is obtained based on the ground truth CSI, and the first CSI report is a complete report, and correspondingly, the network device receives the first information and the second information.

It may be understood that the first information and the second information may be sent in a same message (message), the first information and the second information are sent in two different messages, or the like. When the first information and the second information are sent in two different messages, a sending sequence, sending time, and the like of the two messages are not limited in this solution.

The ground truth CSI may be understood as CSI obtained by the user equipment UE by measuring the downlink reference signal. The CSI is uncompressed CSI, and the CSI may be a channel response matrix measured by the UE, a precoding matrix obtained by processing the channel response matrix, or the like. The ground truth CSI may also be referred to as input CSI, a model input, measurement CSI, original CSI, ground-truth CSI, or the like. This is not limited in this solution.

The ground truth CSI is obtained based on the reference signal.

For example, the ground truth CSI may be obtained by measuring the reference signal, or the ground truth CSI may be obtained by performing eigen decomposition or singular value decomposition on CSI obtained through measurement.

The first CSI report may be referred to as CSI feedback (CSI feedback), a CSI latent space (latent space), quantized CSI (quantized CSI), compressed CSI (compressed CSI, CSI compression), or the like. The first CSI report may be used for model monitoring. The model monitoring is to monitor, for example, performance of an AI model and determine whether the AI model works normally. For example, if the performance of the AI model is poor, a non-AI mode needs to be switched to, the AI model needs to be replaced or updated, or the like. The model monitoring may be to monitor accuracy (which may also be referred to as an intermediate key performance indicator (key performance indicator, KPI), intermediate KPI) of an output of the AI model or may be to monitor system performance (which may also be referred to as monitor an eventual KPI, eventual KPI). The accuracy of the output of the AI model is monitored by comparing a difference between the output of the AI model with a corresponding label or ground truth (ground-truth), to determine whether the performance of the AI model meets a requirement. The system performance is monitored to monitor whether performance of a communication system meets a requirement after the AI model is used. The intermediate KPI usually includes a cosine similarity GCS (generalized cosine similarity), a square cosine similarity SGCS (square GCS), a mean squared error MSE (mean squared error), a normalized mean squared error NMSE (normalized mean squared error), and the like. The eventual KPI usually includes a throughput, spectral efficiency, a transmission rate, a block error rate BLER (block error rate), a hypothetical BLER (hypothetical BLER), a hybrid automatic repeat request (hybrid automatic repeat request, HARQ) feedback, and the like.

The first CSI report may be the complete report. The complete report may be understood as a CSI report without omission (omission), and the complete report may include information such as compressed CSI or quantized CSI.

In a possible implementation, an encoder (encoder) in an auto-encoder AE model is deployed on a user equipment side. The encoder may also be referred to as a CSI generator, a CSI generation model, or a CSI generation part. The first CSI report may be obtained by inputting the ground truth CSI into the encoder for CSI compression and quantization.

In a possible implementation, the user equipment and the network device perform model monitoring by using a complete CSI report based on a protocol definition. In this case, the user equipment sends the first CSI report to the network device, where the first CSI report is the complete report.

In another possible implementation, the network device sends first indication information to the user equipment, where the first indication information indicates to use a complete CSI report to perform model monitoring; or the first indication information indicates the user equipment to send a complete CSI report, and correspondingly, the user equipment receives the first indication information. Further, the user equipment sends the first CSI report based on the first indication information, where the first CSI report is the complete report.

In a possible implementation, the network device sends fifth information to the user equipment, where the fifth information indicates a first resource, and the first resource is used to transmit a complete CSI report.

In a model monitoring process, or when the network device configures the user equipment to feed back a CSI report used for model monitoring, the network device needs to allocate sufficient uplink resources to the user equipment for transmitting a complete CSI report. In this way, the user equipment can transmit the complete CSI report on the resources.

In a possible implementation, the user equipment does not expect that CSI omission occurs on a CSI report used for model monitoring, or the user equipment does not expect to omit a CSI report used for model monitoring, or the user equipment does not expect that a resource used to transmit a CSI report used for model monitoring is less than a resource needed for the CSI report used for model monitoring.

In this way, the network device needs to configure sufficient resources for the user equipment to transmit a complete CSI report.

In a possible implementation, when a CSI report used for model monitoring is omitted, or when a resource used to transmit the CSI report used for model monitoring is less than a resource needed for the CSI report used for model monitoring, the user equipment sends sixth information to the network device, where the sixth information includes at least one of a size of the CSI report used for model monitoring, a size of an omitted part of the CSI report used for model monitoring, the resource needed for the CSI report used for model monitoring, and a resource needed for the omitted part of the CSI report used for model monitoring.

In this way, the network device may allocate an additional resource for transmitting the CSI report to transmit the complete CSI report.

In a possible implementation, a priority of a CSI report (namely, the first CSI report, the following second CSI report, or the like) used for model monitoring is higher than a priority of another CSI report (for example, a report used for CSI feedback, for example, the following third CSI report), or priorities of bits in a CSI report (namely, the first CSI report, the following second CSI report, or the like) used for model monitoring are not distinguished, or a priority of a CSI report used for model monitoring is the same as a priority of a report used to feed back ground truth CSI, and is higher than a priority of another CSI report.

When the priority of the CSI report used for model monitoring is higher than the priority of the another CSI report, when a conflict occurs on two or more CSI reports of the user equipment in time domain, the user equipment does not send a CSI report with a lower priority in some cases.

The priorities of the bits in the CSI report used for model monitoring are not distinguished, that is, priorities of report content in the CSI report used for model monitoring are not distinguished. For example, the report content in the CSI report used for model monitoring includes compressed CSI of different ranks (layers or streams) or different segments, the compressed CSI of different ranks or different segments is distinguished by using different bits, and priorities of this part of bits are not distinguished.

In a possible implementation, the user equipment reports, by using higher layer signaling, a CSI report (namely, the first CSI report, the following second CSI report, or the like) used for model monitoring. The higher layer signaling may be, for example, medium access control (Medium Access Control, MAC) layer signaling or radio resource control (Radio Resource Control, RRC) signaling. For example, the user equipment may send the second information, or the first information and the second information to the network device by using the RRC signaling. In other words, regardless of whether the user equipment sends a complete CSI report or an omitted CSI report in a CSI feedback process of model inference, the user equipment sends the complete CSI report by using the higher layer signaling in a model monitoring process. In other words, the user equipment separately sends, by using higher layer signaling and uplink control information (Uplink Control Information, UCI), CSI reports representing same CSI, where the UCI is used in the CSI feedback process of model inference, and the higher layer signaling is used for model monitoring.

603: The network device obtains first model monitoring performance based on the first information and the second information.

In a possible implementation, the network device obtains recovery CSI based on the second information.

The recovery CSI may be understood as CSI obtained by recovering compressed CSI. The recovery CSI may also be referred to as output CSI, reconstructed CSI, recovery CSI, reconstructed CSI, output CSI, or CSI reconstruction.

In a possible implementation, a decoder (decoder) in the auto-encoder AE model is deployed on a network device side. The decoder may also be referred to as a CSI reconstructor, a CSI reconstruction model, or a CSI reconstruction part. The recovery CSI may be obtained by inputting the first CSI report into the decoder for CSI recovery.

Further, the network device obtains the first model monitoring performance based on the first information (the ground truth CSI) and the recovery CSI.

For example, when the first model monitoring performance is an intermediate KPI (for example, a GCS), $KPI \left(H, \hat{H}\right) = GCS \left(H, \hat{H}\right) = \frac{1}{N} {\sum }_{i = 1}^{N} \frac{\left‖{{\hat{w}}_{i}}^{H}{w}_{i}\right‖}{\left‖{\hat{w}}_{i}\right‖ \left‖{w}_{i}\right‖}$, where *ŵᵢ* is recovery CSI of an i^{th} resource unit, *wᵢ* is ground truth CSI of the i^{th} resource unit, ||*ŵᵢ*|| is a norm of *ŵᵢ*, N is a total quantity of resource units, *H* is the ground truth CSI, and *Ĥ* is the recovery CSI.

For example, when the first model monitoring performance is an intermediate KPI (for example, an SGCS), $KPI \left(H, \hat{H}\right) = SGCS \left(H, \hat{H}\right) = \frac{1}{N} {{\sum }_{i = 1}^{N} \left(\frac{\left‖{{\hat{w}}_{i}}^{H}{w}_{i}\right‖}{\left‖{\hat{w}}_{i}\right‖ \left‖{w}_{i}\right‖}\right)}^{2}$, where *ŵᵢ^{H}* is recovery CSI of an i^{th} resource unit, and *wᵢ* is ground truth CSI of the i^{th} resource unit.

For example, when the first model monitoring performance is an intermediate KPI (for example, an MSE), $KPI \left(H, \hat{H}\right) = MSE \left(H, \hat{H}\right) = \frac{1}{N} {\sum }_{i = 1}^{N} {\left‖{w}_{i}-{\hat{w}}_{i}\right‖}^{2}$, where *ŵᵢ* is recovery CSI of an i^{th} resource unit, and *wᵢ* is ground truth CSI of the i^{th} resource unit.

For example, when the first model monitoring performance is an intermediate KPI (for example, an NMSE), $KPI \left(H, \hat{H}\right) = NMSE \left(H, \hat{H}\right) = \frac{1}{N} {\sum }_{i = 1}^{N} \frac{{\left‖{w}_{i}-{\hat{w}}_{i}\right‖}^{2}}{{\left‖{w}_{i}\right‖}^{2}}$, where *ŵᵢ* is recovery CSI of an i^{th} resource unit, and *wᵢ* is ground truth CSI of the i^{th} resource unit.

Based on the processing, performance of a monitored model can be obtained.

In a possible implementation, the method further includes step 604: The user equipment further sends third information to the network device, where the third information includes a second CSI report, the second CSI report is an omitted report, and the second CSI report is obtained based on the reference signal, and correspondingly, the network device receives the third information.

The omitted report may be understood as a CSI report in which partial content is discarded or omitted. The omitted report may include partial content of compressed CSI or quantized CSI. In other words, the omitted report is a report obtained by omitting the compressed CSI or the quantized CSI information in the complete report. For example, when uplink resources used to transmit a CSI report are insufficient to transmit a complete CSI report, the user equipment omits a part of bits or partial content with a low priority in the CSI report.

The second CSI report is also used for model monitoring. The second CSI report may be obtained by measuring the reference signal. For example, the second CSI report and the first CSI report are obtained by measuring the reference signal at a same time, that is, the omitted CSI report is obtained by performing omission on the first CSI report (a complete CSI report); or the second CSI report and the first CSI report are obtained by measuring the reference signal at different times. This is not limited in this solution.

Correspondingly, the method further includes step 605: The network device obtains second model monitoring performance based on the first information and the third information. For descriptions of this part, refer to the foregoing records of obtaining the first model monitoring performance. Details are not described herein again.

In this example, the user equipment not only sends a complete CSI report (the first CSI report) to the network device, but also sends an omitted CSI report (the second CSI report). Both the first CSI report and the second CSI report are used for model monitoring. The network device may obtain the first model monitoring performance and the second model monitoring performance based on the first CSI report and the second CSI report. Based on this example, both performance of a model and robustness of the model for CSI omission can be monitored.

Optionally, the second CSI report may alternatively be a complete report. This is not limited in this solution.

In a possible implementation, the method further includes step 606: The user equipment sends fourth information to the network device, where the fourth information includes a third CSI report, the third CSI report is an omitted report, and the third CSI report is used for CSI feedback.

The third CSI report is used for CSI feedback. For example, during model inference, CSI feedback is performed by using an AI model, so that the network device obtains precoding used for downlink transmission. The model inference may be understood as performing CSI feedback by using the AI model.

The third CSI report is obtained by omitting a bit or content with a low priority in a complete report.

It may be understood that the third CSI report may alternatively be a complete report. This is not limited in this solution.

In this embodiment of this application, the user equipment sends the first information and the second information to the network device, where the first information includes the ground truth CSI, and the second information includes the first CSI report. The first CSI report is the complete report. In this way, the network device can obtain model monitoring performance based on the ground truth CSI and the first CSI report. In this manner, the network device performs model monitoring by using a complete CSI report, so that impact of CSI omission can be excluded, and performance of a model is monitored.

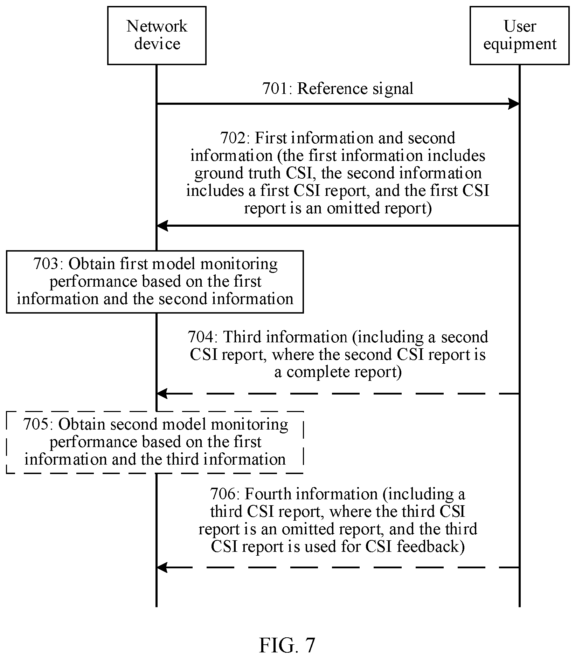

The example shown in FIG. 6 is described by using an example in which the first CSI report is the complete report. The following describes the example by using an example in which the first CSI report is an omitted report. FIG. 7 is a schematic flowchart of a model monitoring method according to an embodiment of this application. Optionally, the method may be applied to the foregoing communication system, for example, the communication system shown in FIG. 1. The model monitoring method shown in FIG. 7 may include step 701 to step 703. It should be understood that, for ease of description in this application, a sequence of 701 to 703 is used for description, but this is not intended to limit execution necessarily performed in the sequence. An execution sequence, execution time, a quantity of execution times, and the like of the foregoing one or more steps are not limited in embodiments of this application. Step 701 to step 703 are specifically as follows.

701: A network device sends a reference signal to user equipment, and correspondingly, the user equipment receives the reference signal.

For example, the reference signal may be a downlink reference signal, for example, a channel state information reference signal CSI-RS.

702: The user equipment sends first information and second information to the network device, where the first information includes ground truth CSI, the ground truth CSI is obtained based on the reference signal, the second information includes a first CSI report, the first CSI report is obtained based on the ground truth CSI, and the first CSI report is a omitted report, and correspondingly, the network device receives the first information and the second information.

The first CSI report is the omitted report. The omitted report may be understood as a CSI report in which partial content is discarded or omitted. The omitted report may include partial content of compressed CSI or quantized CSI. In other words, the omitted report is a report obtained by omitting the compressed CSI or the quantized CSI information in a complete report. For example, when uplink resources used to transmit a CSI report are insufficient to transmit a complete CSI report, the user equipment omits a part of bits or partial content with a low priority in the CSI report.

In a possible implementation, the user equipment and the network device perform model monitoring by using an omitted CSI report based on a protocol definition. In this case, the user equipment sends the first CSI report to the network device, where the first CSI report is the omitted report.

In another possible implementation, the network device sends second indication information to the user equipment, where the second indication information indicates to use an omitted CSI report to perform model monitoring; or the second indication information indicates to send an omitted CSI report, and correspondingly, the user equipment receives the second indication information. Further, the user equipment sends the first CSI report based on the second indication information, where the first CSI report is the omitted report.

In a possible implementation, an encoder (encoder) in an auto-encoder AE model is deployed on a user equipment side. The encoder may also be referred to as a CSI generator, a CSI generation model, or a CSI generation part. A complete CSI report may be obtained by inputting ground truth CSI into the encoder for CSI compression and quantization. Further, the first CSI report may be obtained by performing omission processing based on the complete CSI report.

In a possible implementation, a priority of a CSI report (namely, the first CSI report, the following second CSI report, or the like) used for model monitoring is higher than a priority of another CSI report (for example, a report used for CSI feedback, for example, the following third CSI report), or priorities of bits in a CSI report (namely, the first CSI report, the following second CSI report, or the like) used for model monitoring are not distinguished, or a priority of a CSI report used for model monitoring is the same as a priority of a report used to feed back ground truth CSI, and is higher than a priority of another CSI report.

When the priority of the CSI report used for model monitoring is higher than the priority of the another CSI report, when a conflict occurs on two or more CSI reports of the user equipment in time domain, the user equipment does not send a CSI report with a lower priority in some cases.

The priorities of the bits in the CSI report used for model monitoring are not distinguished, that is, priorities of report content in the CSI report used for model monitoring are not distinguished. For example, the report content in the CSI report used for model monitoring includes compressed CSI of different ranks (layers or streams) or different segments, the compressed CSI of different ranks or different segments is distinguished by using different bits, and priorities of this part of bits are not distinguished.

In a possible implementation, the user equipment reports, by using higher layer signaling, a CSI report (namely, the first CSI report, the following second CSI report, or the like) used for model monitoring. The higher layer signaling may be, for example, medium access control MAC layer signaling or radio resource control RRC signaling. For example, the user equipment may send the second information, or the first information and the second information to the network device by using the RRC signaling. In other words, regardless of whether the user equipment sends a complete CSI report or an omitted CSI report in a CSI feedback process of model inference, the user equipment sends the complete CSI report by using the higher layer signaling in a model monitoring process. In other words, the user equipment separately sends, by using higher layer signaling and UCI, CSI reports representing same CSI, where the UCI is used in the CSI feedback process of model inference, and the higher layer signaling is used for model monitoring.

703: The network device obtains first model monitoring performance based on the first information and the second information.

In a possible implementation, the network device obtains recovery CSI based on the second information. For example, a decoder (decoder) in the auto-encoder AE model is deployed on a network device side. The decoder may also be referred to as a CSI reconstructor, a CSI reconstruction model, or a CSI reconstruction part. The recovery CSI may be obtained by inputting the first CSI report into the decoder for CSI recovery.

Further, the network device obtains the first model monitoring performance based on the first information (the ground truth CSI) and the recovery CSI.

For descriptions of this step, refer to the records of step 603 in the embodiment shown in FIG. 6. Details are not described herein again.

In a possible implementation, the method further includes step 704: The user equipment further sends third information to the network device, where the third information includes a second CSI report, the second CSI report is a complete report, and the second CSI report is obtained based on the reference signal, and correspondingly, the network device receives the third information.

The second CSI report is also used for model monitoring. The second CSI report may be obtained by measuring the reference signal. For example, the second CSI report and the first CSI report are obtained by measuring the reference signal at a same time, that is, the omitted CSI report (the first CSI report) is obtained by performing omission on the second CSI report (a complete CSI report); or the second CSI report and the first CSI report are obtained by measuring the reference signal at different times. This is not limited in this solution.

Correspondingly, the method further includes step 705: The network device obtains second model monitoring performance based on the first information and the third information. For descriptions of this part, refer to the foregoing records of obtaining the first model monitoring performance. Details are not described herein again.

In this example, the user equipment not only sends an omitted CSI report (the first CSI report) to the network device, but also sends a complete CSI report (the second CSI report). Both the first CSI report and the second CSI report are used for model monitoring. The network device may obtain the first model monitoring performance and the second model monitoring performance based on the first CSI report and the second CSI report.

Optionally, the second CSI report may alternatively be an omitted report. This is not limited in this solution.

In a possible implementation, the method further includes step 706: The user equipment sends fourth information to the network device, where the fourth information includes a third CSI report, the third CSI report is an omitted report, and the third CSI report is used for CSI feedback.

The third CSI report is used for CSI feedback. For example, during model inference, CSI feedback is performed by using an AI model, so that the network device obtains precoding used for downlink transmission. The model inference may be understood as performing CSI feedback by using the AI model.

The third CSI report is obtained by omitting a bit or content with a low priority in a complete report. For descriptions of this part, refer to the foregoing records of step 702. Details are not described herein again.

It may be understood that the third CSI report may alternatively be a complete report. This is not limited in this solution.

In this embodiment of this application, the user equipment sends the first information and the second information to the network device, where the first information includes the ground truth CSI, and the second information includes the first CSI report. The first CSI report is the omitted report. In this way, the network device can obtain model monitoring performance based on the ground truth CSI and the first CSI report. In this manner, the network device performs model monitoring by using an omitted CSI report, so that robustness of a model for CSI omission can be monitored.

The foregoing example is described by using an example in which model performance monitoring is performed on a network device side. The following describes the example by using an example in which model performance monitoring is performed on a user equipment side.

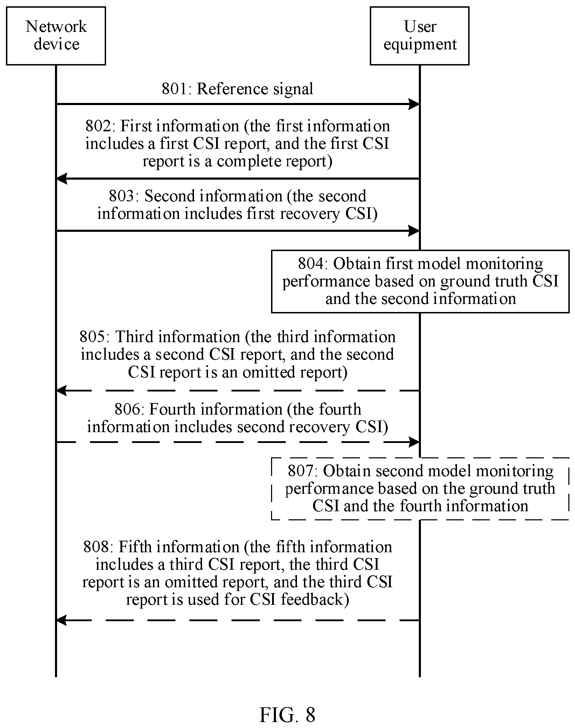

FIG. 8 is a schematic flowchart of a model monitoring method according to an embodiment of this application. Optionally, the method may be applied to the foregoing communication system, for example, the communication system shown in FIG. 1. The model monitoring method shown in FIG. 8 may include step 801 to step 804. It should be understood that, for ease of description in this application, a sequence of 801 to 804 is used for description, but this is not intended to limit execution necessarily performed in the sequence. An execution sequence, execution time, a quantity of execution times, and the like of the foregoing one or more steps are not limited in embodiments of this application. Step 801 to step 804 are specifically as follows.

801: A network device sends a reference signal to user equipment, and correspondingly, the user equipment receives the reference signal.

For descriptions of this step, refer to the records of step 601 in the embodiment shown in FIG. 6. Details are not described herein again.

802: The user equipment sends first information to the network device, where the first information includes a first CSI report, the first CSI report is obtained based on the reference signal, and the first CSI report is a complete report, and correspondingly, the network device receives the first information.

For example, the user equipment obtains ground truth CSI by measuring the reference signal, or obtains the ground truth CSI by performing eigen decomposition or singular value decomposition on CSI obtained through measurement. Further, the user equipment may obtain the first CSI report by inputting the ground truth CSI into an encoder for CSI compression and quantization.

In a possible implementation, the user equipment and the network device perform model monitoring by using a complete CSI report based on a protocol definition. In this case, the user equipment sends the first CSI report to the network device, where the first CSI report is the complete report.

In another possible implementation, the network device sends first indication information to the user equipment, where the first indication information indicates to use a complete CSI report to perform model monitoring; or the first indication information indicates the user equipment to send a complete CSI report, and correspondingly, the user equipment receives the first indication information. Further, the user equipment sends the first CSI report based on the first indication information, where the first CSI report is the complete report.

In a possible implementation, the network device sends fifth information to the user equipment, where the fifth information indicates a first resource, and the first resource is used to transmit a complete CSI report.

In a model monitoring process, or when the network device configures the user equipment to feed back a CSI report used for model monitoring, the network device needs to allocate sufficient uplink resources to the user equipment for transmitting a complete CSI report. In this way, the user equipment can transmit the complete CSI report on the resources.

In a possible implementation, the user equipment does not expect that CSI omission occurs on a CSI report used for model monitoring, or the user equipment does not expect to omit a CSI report used for model monitoring, or the user equipment does not expect that a resource used to transmit a CSI report used for model monitoring is less than a resource needed for the CSI report used for model monitoring.

In this way, the network device needs to configure sufficient resources for the user equipment to transmit a complete CSI report.

In a possible implementation, when a CSI report used for model monitoring is omitted, or when a resource used to transmit the CSI report used for model monitoring is less than a resource needed for the CSI report used for model monitoring, the user equipment sends sixth information to the network device, where the sixth information includes at least one of a size of the CSI report used for model monitoring, a size of an omitted part of the CSI report used for model monitoring, the resource needed for the CSI report used for model monitoring, and a resource needed for the omitted part of the CSI report used for model monitoring.

In this way, the network device may allocate an additional resource for transmitting the CSI report to transmit the complete CSI report.

In a possible implementation, a priority of a CSI report (namely, the first CSI report, the following second CSI report, or the like) used for model monitoring is higher than a priority of another CSI report (for example, a report used for CSI feedback, for example, the following third CSI report), or priorities of bits in a CSI report (namely, the first CSI report, the following second CSI report, or the like) used for model monitoring are not distinguished, or a priority of a CSI report used for model monitoring is the same as a priority of a report used to feed back ground truth CSI, and is higher than a priority of another CSI report.

In a possible implementation, the user equipment reports, by using higher layer signaling, a CSI report (namely, the first CSI report, the following second CSI report, or the like) used for model monitoring. The higher layer signaling may be, for example, medium access control MAC layer signaling or radio resource control RRC signaling. For example, the user equipment may send the first information to the network device by using the RRC signaling.

For descriptions of this part, refer to the foregoing records of step 602 in the embodiment shown in FIG. 6. Details are not described herein again.

803: The network device sends second information to the user equipment, where the second information indicates first recovery CSI, and the first recovery CSI is obtained based on the first CSI report, and correspondingly, the user equipment receives the second information.

For example, the network device may obtain the first recovery CSI by inputting the first CSI report to a decoder for processing. Further, the network device sends the first recovery CSI to the user equipment. Alternatively, the second information sent by the network device to the user equipment includes a reference signal, and the first recovery CSI is integrated (carried) in the reference signal. This is not limited in this solution.

804: The user equipment obtains first model monitoring performance based on ground truth CSI and the second information, where the ground truth CSI is obtained based on the reference signal.

The user equipment obtains the first model monitoring performance based on the ground truth CSI and the first recovery CSI. For descriptions of this step, refer to the foregoing records of step 603 in the embodiment shown in FIG. 6. Details are not described herein again.

In a possible implementation, the user equipment sends the first model monitoring performance to the network device, and correspondingly, the network device receives the first model monitoring performance. In this way, the network device can switch to a non-AI model or replace an AI model when performance of the AI model is poor.

In a possible implementation, the method further includes step 805: The user equipment further sends third information to the network device, where the third information includes a second CSI report, the second CSI report is an omitted report, and the second CSI report is obtained based on the reference signal, and correspondingly, the network device receives the third information.

The method further includes step 806: The network device further sends fourth information to the user equipment, where the fourth information indicates second recovery CSI, and the second recovery CSI is obtained based on the second CSI report, and correspondingly, the user equipment receives the fourth information.

Correspondingly, the method further includes step 807: The user equipment obtains second model monitoring performance based on the ground truth CSI and the fourth information (the second recovery CSI). For descriptions of this part, refer to the foregoing records of step 603 in the embodiment shown in FIG. 6. Details are not described herein again.

In this example, the user equipment not only sends a complete CSI report (the first CSI report) to the network device, but also sends an omitted CSI report (the second CSI report). Both the first CSI report and the second CSI report are used for model monitoring. The network device may obtain the first model monitoring performance and the second model monitoring performance based on the first CSI report and the second CSI report.

In a possible implementation, the method further includes step 808: The user equipment sends fifth information to the network device, where the fifth information includes a third CSI report, the third CSI report is an omitted report, and the third CSI report is used for CSI feedback.

The third CSI report is used for CSI feedback. For example, during model inference, CSI feedback is performed by using an AI model, so that the network device obtains precoding used for downlink transmission.

For descriptions of the third CSI report, refer to the records of a part of step 603 in the embodiment shown in FIG. 6. Details are not described herein again.

In this embodiment of this application, the user equipment sends the first information to the network device, where the first information includes the first CSI report. The first CSI report is the complete report. The network device obtains recovery CSI based on the first CSI report, and sends the recovery CSI to the user equipment. In this way, the user equipment can obtain model monitoring performance based on the ground truth CSI and the recovery CSI. In this manner, the user equipment performs model monitoring by using a complete CSI report, so that impact of CSI omission can be excluded, and performance of a model is monitored.

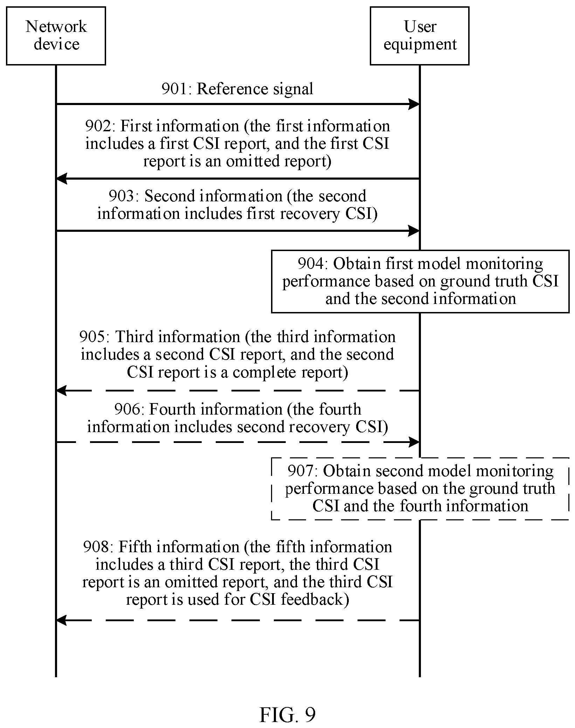

The example shown in FIG. 8 is described by using an example in which the first CSI report is the complete report. The following describes the example by using an example in which the first CSI report is an omitted report. FIG. 9 is a schematic flowchart of a model monitoring method according to an embodiment of this application. Optionally, the method may be applied to the foregoing communication system, for example, the communication system shown in FIG. 1. The model monitoring method shown in FIG. 9 may include step 901 to step 904. It should be understood that, for ease of description in this application, a sequence of 901 to 904 is used for description, but this is not intended to limit execution necessarily performed in the sequence. An execution sequence, execution time, a quantity of execution times, and the like of the foregoing one or more steps are not limited in embodiments of this application. Step 901 to step 904 are specifically as follows.

901: A network device sends a reference signal to user equipment, and correspondingly, the user equipment receives the reference signal.

For descriptions of this step, refer to the records of step 601 in the embodiment shown in FIG. 6. Details are not described herein again.

902: The user equipment sends first information to the network device, where the first information includes a first CSI report, the first CSI report is obtained based on the reference signal, and the first CSI report is an omitted report, and correspondingly, the network device receives the first information.

In a possible implementation, the user equipment and the network device perform model monitoring by using an omitted CSI report based on a protocol definition. In this case, the user equipment sends the first CSI report to the network device, where the first CSI report is the omitted report.

In another possible implementation, the network device sends second indication information to the user equipment, where the second indication information indicates to use an omitted CSI report to perform model monitoring; or the second indication information indicates to send an omitted CSI report, and correspondingly, the user equipment receives the second indication information. Further, the user equipment sends the first CSI report based on the second indication information, where the first CSI report is the omitted report.

In a possible implementation, a priority of a CSI report (namely, the first CSI report, the following second CSI report, or the like) used for model monitoring is higher than a priority of another CSI report (for example, a report used for CSI feedback, for example, the following third CSI report), or priorities of bits in a CSI report (namely, the first CSI report, the following second CSI report, or the like) used for model monitoring are not distinguished, or a priority of a CSI report used for model monitoring is the same as a priority of a report used to feed back ground truth CSI.

In a possible implementation, the user equipment reports, by using higher layer signaling, a CSI report (namely, the first CSI report, the following second CSI report, or the like) used for model monitoring. The higher layer signaling may be, for example, medium access control MAC layer signaling or radio resource control RRC signaling. For example, the user equipment may send the first information to the network device by using the RRC signaling. In other words, regardless of whether the user equipment sends a complete CSI report or an omitted CSI report in a CSI feedback process of model inference, the user equipment sends the complete CSI report by using the higher layer signaling in a model monitoring process. In other words, the user equipment separately sends, by using higher layer signaling and UCI, CSI reports representing same CSI, where the UCI is used in the CSI feedback process of model inference, and the higher layer signaling is used for model monitoring.

For descriptions of this step, refer to the foregoing records of step 602 in the embodiment shown in FIG. 6, step 703 in the embodiment shown in FIG. 7, and the like. Details are not described herein again.

903: The network device sends second information to the user equipment, where the second information indicates first recovery CSI, and the first recovery CSI is obtained based on the first CSI report, and correspondingly, the user equipment receives the second information.

For example, the network device may obtain the first recovery CSI by inputting the first CSI report to a decoder for processing. Further, the network device sends the first recovery CSI to the user equipment. For descriptions of this step, refer to the foregoing records of step 603 in the embodiment shown in FIG. 6. Details are not described herein again.

904: The user equipment obtains first model monitoring performance based on ground truth CSI and the second information, where the ground truth CSI is obtained based on the reference signal.

The user equipment obtains the first model monitoring performance based on the ground truth CSI and the first recovery CSI. For descriptions of this step, refer to the foregoing records of step 603 in the embodiment shown in FIG. 6. Details are not described herein again.

In a possible implementation, the user equipment sends the first model monitoring performance to the network device, and correspondingly, the network device receives the first model monitoring performance. In this way, the network device can switch to a non-AI model or replace an AI model when performance of the AI model is poor.

In a possible implementation, the method further includes step 905: The user equipment further sends third information to the network device, where the third information includes a second CSI report, the second CSI report is a complete report, and the second CSI report is obtained based on the reference signal, and correspondingly, the network device receives the third information.

The method further includes step 906: The network device further sends fourth information to the user equipment, where the fourth information indicates second recovery CSI, and the second recovery CSI is obtained based on the second CSI report, and correspondingly, the user equipment receives the fourth information.

Correspondingly, the method further includes step 907: The user equipment obtains second model monitoring performance based on the ground truth CSI and the fourth information (the second recovery CSI). For descriptions of this part, refer to the foregoing records of obtaining the first model monitoring performance. Details are not described herein again.

In this example, the user equipment not only sends an omitted CSI report (the first CSI report) to the network device, but also sends a complete CSI report (the second CSI report). Both the first CSI report and the second CSI report are used for model monitoring. The network device may obtain the first model monitoring performance and the second model monitoring performance based on the first CSI report and the second CSI report.

In a possible implementation, the method further includes step 908: The user equipment sends fifth information to the network device, where the fifth information includes a third CSI report, the third CSI report is an omitted report, and the third CSI report is used for CSI feedback.

The third CSI report is used for CSI feedback. For example, during model inference, CSI feedback is performed by using an AI model, so that the network device obtains precoding used for downlink transmission.

For descriptions of this part, refer to the records of step 603 in the embodiment shown in FIG. 6. Details are not described herein again.

In this embodiment of this application, the user equipment sends the first information to the network device, where the first information includes the first CSI report. The first CSI report is the omitted report. The network device obtains recovery CSI based on the first CSI report, and sends the recovery CSI to the user equipment. In this way, the user equipment can obtain model monitoring performance based on the ground truth CSI and the recovery CSI. In this manner, the user equipment performs model monitoring by using an omitted CSI report, so that robustness of a model for CSI omission can be monitored.

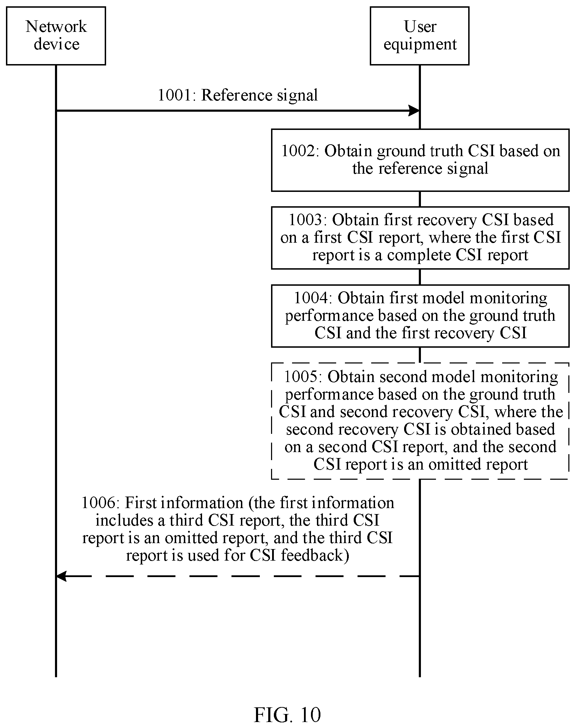

For another example, the example is described by using an example in which model performance monitoring is performed on a user equipment side based on a proxy (proxy) model. The proxy (proxy) model is a model used by a user equipment side to simulate a CSI reconstructor on a network device side. FIG. 10 is a schematic flowchart of still another model monitoring method according to an embodiment of this application. Optionally, the method may be applied to the foregoing communication system, for example, the communication system shown in FIG. 1. The model monitoring method shown in FIG. 10 may include step 1001 to step 1004. It should be understood that, for ease of description in this application, a sequence of 1001 to 1004 is used for description, but this is not intended to limit execution necessarily performed in the sequence. An execution sequence, execution time, a quantity of execution times, and the like of the foregoing one or more steps are not limited in embodiments of this application. Step 1001 to step 1004 are specifically as follows.

1001: A network device sends a reference signal to user equipment, and correspondingly, the user equipment receives the reference signal.

For descriptions of this step, refer to the records of step 601 in the embodiment shown in FIG. 6. Details are not described herein again.

1002: The user equipment obtains ground truth CSI based on the reference signal.

For example, the user equipment may obtain the ground truth CSI by measuring the reference signal, or obtain the ground truth CSI by performing eigen decomposition or singular value decomposition on CSI obtained through measurement.

For descriptions of this step, refer to the records of step 601 in the embodiment shown in FIG. 6. Details are not described herein again.

1003: The user equipment obtains first recovery CSI based on a first CSI report, where the first CSI report is obtained based on the ground truth CSI, and the first CSI report is a complete CSI report.

For example, the user equipment obtains the first CSI report based on the ground truth CSI, and further, the user equipment processes the first CSI report by using the proxy model, to obtain the first recovery CSI. In other words, different from the examples shown in FIG. 8 and

FIG. 9 in which the first recovery CSI is obtained based on the network device, the first recovery CSI in this example is obtained by the user equipment by performing processing by using the proxy model.

In a possible implementation, the user equipment and the network device perform model monitoring by using a complete CSI report based on a protocol definition. In this case, the user equipment uses the complete report to obtain the first recovery CSI.

In another possible implementation, the network device sends first indication information to the user equipment, where the first indication information indicates to use a complete CSI report to perform model monitoring; or the first indication information indicates the user equipment to report model monitoring performance based on a complete CSI report, and correspondingly, the user equipment receives the first indication information. Further, the user equipment uses the complete report to obtain the first recovery CSI.

For descriptions of this part, refer to the records in the foregoing embodiments. Details are not described herein again.

1004: The user equipment obtains first model monitoring performance based on the ground truth CSI and the first recovery CSI.

For descriptions of this step, refer to the records of step 603 in the embodiment shown in FIG. 6. Details are not described herein again.

In a possible implementation, the user equipment sends the first model monitoring performance to the network device, and correspondingly, the network device receives the first model monitoring performance. In this way, the network device can switch to a non-AI model or replace an AI model when performance of the AI model is poor.

In a possible implementation, the method further includes step 1005: The user equipment obtains second model monitoring performance based on the ground truth CSI and second recovery CSI, where the second recovery CSI is obtained based on a second CSI report, the second CSI report is an omitted report, and the second CSI report is obtained based on the reference signal.

In a possible implementation, the user equipment further reports the second model monitoring performance to the network device.

In a possible implementation, the method further includes step 1006: The user equipment sends first information to the network device, where the first information includes a third CSI report, the third CSI report is an omitted report, and the third CSI report is used for CSI feedback.

For descriptions of this part, refer to the foregoing records in the embodiment shown in FIG. 6, FIG. 7, FIG. 8, or FIG. 9. Details are not described herein again.

In this embodiment of this application, the user equipment obtains the ground truth CSI based on the reference signal, and obtains the first CSI report based on the ground truth CSI. The first CSI report is the complete report. The user equipment further obtains recovery CSI based on the first CSI report. In this way, the user equipment can obtain model monitoring performance based on the ground truth CSI and the recovery CSI. In this manner, the user equipment performs model monitoring by using a complete CSI report, so that impact of CSI omission can be excluded, and performance of a model is monitored.

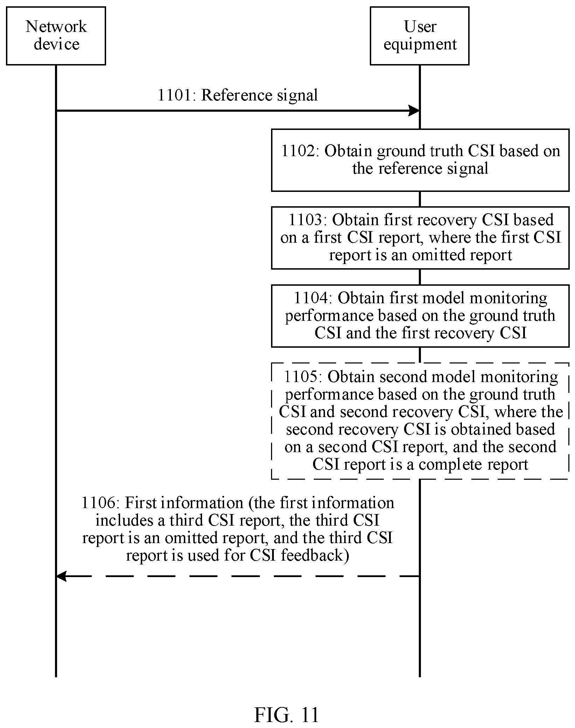

The example shown in FIG. 10 is described by using an example in which the first CSI report is the complete report. The following describes the example by using an example in which the first CSI report is an omitted report. FIG. 11 is a schematic flowchart of still another model monitoring method according to an embodiment of this application. Optionally, the method may be applied to the foregoing communication system, for example, the communication system shown in FIG. 1. The model monitoring method shown in FIG. 11 may include step 1101 to step 1104. It should be understood that, for ease of description in this application, a sequence of 1101 to 1104 is used for description, but this is not intended to limit execution necessarily performed in the sequence. An execution sequence, execution time, a quantity of execution times, and the like of the foregoing one or more steps are not limited in embodiments of this application. Step 1101 to step 1104 are specifically as follows.

1101: A network device sends a reference signal to user equipment, and correspondingly, the user equipment receives the reference signal.

For descriptions of this step, refer to the records of step 601 in the embodiment shown in FIG. 6. Details are not described herein again.

1102: The user equipment obtains ground truth CSI based on the reference signal.

For example, the user equipment may obtain the ground truth CSI by measuring the reference signal, or obtain the ground truth CSI by performing eigen decomposition or singular value decomposition on CSI obtained through measurement.

For descriptions of this step, refer to the records of step 601 in the embodiment shown in FIG. 6. Details are not described herein again.

1103: The user equipment obtains first recovery CSI based on a first CSI report, where the first CSI report is obtained based on the ground truth CSI, and the first CSI report is an omitted report.

For example, the user equipment obtains a complete CSI report based on the ground truth CSI, and obtains the first CSI report by performing omission processing on the complete CSI report. Further, the user equipment processes the first CSI report by using a proxy model, to obtain the first recovery CSI. In other words, different from the examples shown in FIG. 8 and FIG. 9 in which the first recovery CSI is obtained based on the network device, the first recovery CSI in this example is obtained by the user equipment by performing processing by using the proxy model.

In a possible implementation, the user equipment and the network device perform model monitoring by using an omitted CSI report based on a protocol definition. In this case, the user equipment uses the omitted report to obtain the first recovery CSI.

In another possible implementation, the network device sends second indication information to the user equipment, where the second indication information indicates to use an omitted CSI report to perform model monitoring; or the second indication information indicates the user equipment to report model monitoring performance based on an omitted CSI report, and correspondingly, the user equipment receives the second indication information. Further, the user equipment uses the omitted report to obtain the first recovery CSI.

For descriptions of this part, refer to the records in the foregoing embodiments. Details are not described herein again.

1104: The user equipment obtains first model monitoring performance based on the ground truth CSI and the first recovery CSI.

For descriptions of this step, refer to the records of step 603 in the embodiment shown in FIG. 6. Details are not described herein again.

In a possible implementation, the user equipment sends the first model monitoring performance to the network device, and correspondingly, the network device receives the first model monitoring performance. In this way, the network device can switch to a non-AI model or replace an AI model when performance of the AI model is poor.

In a possible implementation, the method further includes step 1105: The user equipment obtains second model monitoring performance based on the ground truth CSI and second recovery CSI, where the second recovery CSI is obtained based on a second CSI report, the second CSI report is a complete report, and the second CSI report is obtained based on the reference signal.

In a possible implementation, the user equipment further reports the second model monitoring performance to the network device.

In a possible implementation, the method further includes step 1106: The user equipment sends first information to the network device, where the first information includes a third CSI report, the third CSI report is an omitted report, and the third CSI report is used for CSI feedback.

For descriptions of this part, refer to the foregoing records in the embodiment shown in FIG. 6, FIG. 7, FIG. 8, FIG. 9, or FIG. 10. Details are not described herein again.

In this embodiment of this application, the user equipment obtains the ground truth CSI based on the reference signal, and obtains the first CSI report based on the ground truth CSI. The first CSI report is the omitted report. The user equipment further obtains recovery CSI based on the first CSI report. In this way, the user equipment can obtain model monitoring performance based on the ground truth CSI and the recovery CSI. In this manner, the user equipment performs model monitoring by using an omitted CSI report, so that robustness of a model for CSI omission can be monitored.

The foregoing examples are described by using an example in which models are deployed on both the user equipment side and the network device side. An embodiment of this application further provides a model monitoring method. In this example, a model is deployed only on a single end of a user equipment side. For example, this method is applicable to a scenario such as CSI prediction on a user equipment side or beam prediction on a user equipment side. The method may include step A11 to step A14. The details are as follows.

A11: A network device sends a reference signal to user equipment, and correspondingly, the user equipment receives the reference signal.

For descriptions of this step, refer to the records of step 601 in the embodiment shown in FIG. 6. Details are not described herein again.

A12: The user equipment obtains predicted CSI based on the reference signal.

The predicted CSI is CSI that is at a future moment and that is predicted based on current CSI and/or past CSI.

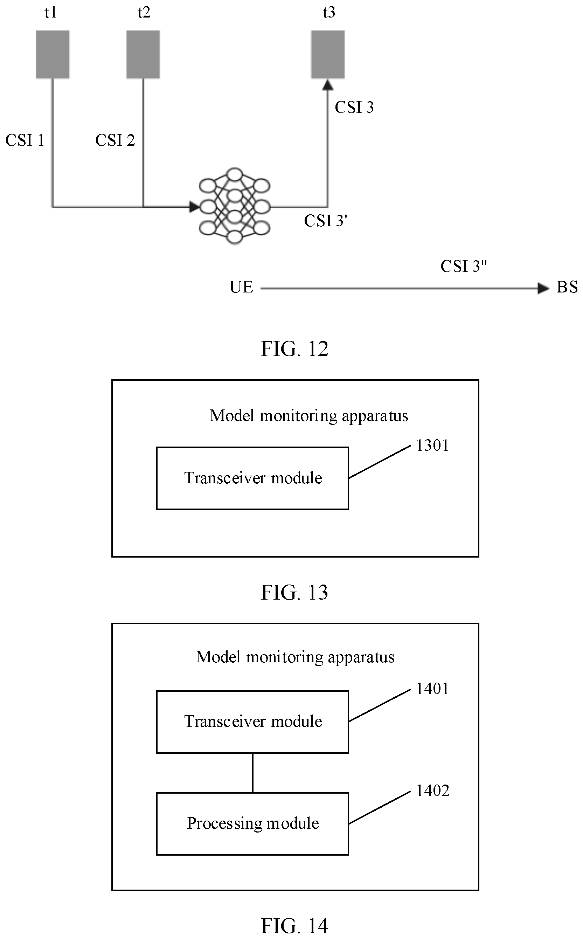

In a possible implementation, the user equipment measures a downlink reference signal to obtain ground truth CSI 1, and then performs CSI prediction based on the ground truth CSI 1, to obtain predicted CSI (as shown in FIG. 12, the predicted CSI may be, for example, CSI 3'). Alternatively, the user equipment separately measures downlink reference signals at a moment t1 and a moment t2, to obtain ground truth CSI 1 and ground truth CSI 2. The user equipment obtains the predicted CSI (for example, CSI 3' shown in FIG. 12) based on the ground truth CSI 1 and the ground truth CSI 2. Certainly, the user equipment may further perform prediction or the like based on at least three pieces of ground truth CSI. This is not limited in this solution.

A13: The user equipment obtains, based on the reference signal, ground truth CSI corresponding to the predicted CSI.

For example, the ground truth CSI is CSI 3 in FIG. 12. For example, the user equipment measures a downlink reference signal at a moment t3, to obtain ground truth CSI 3, where the CSI 3 is ground truth CSI corresponding to the predicted CSI 3'.

A14: The user equipment obtains model monitoring performance based on a first CSI report and the ground truth CSI corresponding to the predicted CSI. The first CSI report is an omitted report, and the first CSI report is obtained based on the predicted CSI.

The first CSI report indicates CSI feedback (for example, CSI 3" shown in FIG. 12) corresponding to the predicted CSI, and the CSI 3" is CSI represented by a CSI report that corresponds to the CSI 3' and on which omission is performed. For example, the CSI 3" is a precoding matrix, and the first CSI report includes the CSI 3" or a compressed representation of the CSI 3". For another example, the CSI 3" is a channel response, and the first CSI report includes a precoding matrix corresponding to the CSI 3" or a compressed representation of the precoding matrix.

For example, the user equipment calculates model monitoring performance by using the CSI 3" and the ground truth CSI (the CSI 3), for example, calculates an intermediate KPI.

In a possible implementation, the user equipment sends the first CSI report to the network device, so that the network device (for example, a base station) determines downlink precoding based on the predicted CSI.

In this embodiment of this application, the user equipment obtains the predicted CSI and the ground truth CSI based on the reference signal, so that the user equipment obtains the model monitoring performance based on the first CSI report and the ground truth CSI corresponding to the predicted CSI. The first CSI report is the omitted report, and the first CSI report is obtained based on the predicted CSI. In this way, the user equipment may monitor actual performance corresponding to an omitted CSI report reported by the user equipment, instead of directly performing model monitoring by using predicted CSI. In this way, impact of CSI omission can be considered for the monitored performance.

It should be noted that, in embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

The methods in embodiments of this application are described in detail above. Apparatuses in embodiments of this application are provided below. It may be understood that, in apparatus embodiments of this application, division into a plurality of units or modules is merely logical division based on functions, and is not intended to limit a specific structure of the apparatus. During specific implementation, some functional modules may be subdivided into more functional modules that are smaller, and some functional modules may also be combined into one functional module. However, regardless of whether these functional modules are subdivided or combined, a general procedure performed by the apparatus is the same. For example, some apparatuses include a receiving unit and a sending unit. In some designs, the sending unit and the receiving unit may alternatively be integrated into a communication unit, and the communication unit may implement functions implemented by the receiving unit and the sending unit. Usually, each unit corresponds to respective program code (or program instructions). When the program code corresponding to the unit is run on a processor, the unit is controlled by a processing unit to perform a corresponding procedure to implement a corresponding function.

Embodiments of this application further provide an apparatus configured to implement any one of the foregoing methods. For example, embodiments of this application provide a model monitoring apparatus including modules (or means) configured to implement the steps performed by the user equipment in any one of the foregoing methods.

For example, FIG. 13 is a diagram of a structure of a model monitoring apparatus according to an embodiment of this application. The model monitoring apparatus is configured to implement the foregoing model monitoring methods, for example, the model monitoring methods shown in FIG. 6 and FIG. 7.

As shown in FIG. 13, the apparatus may include a transceiver module 1301. Details are as follows.

The transceiver module 1301 is configured to receive a reference signal.

The transceiver module 1301 is further configured to send first information and second information, where the first information includes ground truth CSI, the ground truth CSI is obtained based on the reference signal, the second information includes a first CSI report, the first CSI report is obtained based on the ground truth CSI, and the first CSI report is a complete report, or the first CSI report is an omitted report.

In a possible implementation, the first CSI report is the complete report, and the transceiver module 1301 is further configured to receive first indication information, where the first indication information indicates to use a complete CSI report to perform model monitoring; or the first indication information indicates to send a complete CSI report.

In a possible implementation, the transceiver module 1301 is further configured to send third information, where the third information includes a second CSI report, the second CSI report is an omitted report, and the second CSI report is obtained based on the reference signal.

In a possible implementation, the first CSI report is the omitted report, and the transceiver module 1301 is further configured to receive second indication information, where the second indication information indicates to use an omitted CSI report to perform model monitoring; or the second indication information indicates to send an omitted CSI report.

In a possible implementation, the transceiver module 1301 is further configured to send fourth information, where the fourth information includes a third CSI report, the third CSI report is an omitted report, and the third CSI report is used for CSI feedback.

In a possible implementation, the first information and the second information are reported by using higher layer signaling.

In a possible implementation, the transceiver module 1301 is further configured to receive fifth information, where the fifth information indicates a first resource, and the first resource is used to transmit a complete CSI report.

In a possible implementation, user equipment does not expect that CSI omission occurs on a CSI report used for model monitoring, or user equipment does not expect to omit a CSI report used for model monitoring, or user equipment does not expect that a resource used to transmit a CSI report used for model monitoring is less than a resource needed for the CSI report used for model monitoring.

In a possible implementation, when the first CSI report is the omitted report, or when a resource used to transmit the first CSI report is less than a resource needed for the first CSI report, the transceiver module 1301 is further configured to send sixth information, the sixth information includes at least one of a size of a CSI report used for model monitoring, a size of an omitted part of the CSI report used for model monitoring, a resource needed for the CSI report used for model monitoring, and a resource needed for the omitted part of the CSI report used for model monitoring.

In a possible implementation, a priority of the first CSI report is higher than a priority of the third CSI report, or priorities of report content in the first CSI report are not distinguished.

For another example, FIG. 14 is a diagram of a structure of another model monitoring apparatus according to an embodiment of this application. The model monitoring apparatus is configured to implement the foregoing model monitoring methods, for example, the model monitoring methods shown in FIG. 8 and FIG. 9.

As shown in FIG. 14, the apparatus may include a transceiver module 1401 and a processing module 1402. Details are as follows.

The transceiver module 1401 is configured to receive a reference signal.

The transceiver module 1401 is further configured to send first information, where the first information includes a first CSI report, the first CSI report is obtained based on the reference signal, and the first CSI report is a complete report, or the first CSI report is an omitted report.

The transceiver module 1401 is further configured to receive second information, where the second information indicates first recovery CSI, and the first recovery CSI is obtained based on the first CSI report.

The processing module 1402 is configured to obtain first model monitoring performance based on ground truth CSI and the first recovery CSI, where the ground truth CSI is obtained based on the reference signal.

In a possible implementation, the first CSI report is the complete report, and the transceiver module 1401 is further configured to receive first indication information, where the first indication information indicates to use a complete CSI report to perform model monitoring; or the first indication information indicates user equipment to send a complete CSI report.

In a possible implementation, the transceiver module 1401 is further configured to send third information, where the third information includes a second CSI report, the second CSI report is an omitted report, and the second CSI report is obtained based on the reference signal; and
receive fourth information, where the fourth information indicates second recovery CSI, and the second recovery CSI is obtained based on the second CSI report.

The processing module 1402 is configured to obtain second model monitoring performance based on the ground truth CSI and the second recovery CSI.

In a possible implementation, the first CSI report is the omitted report, and the transceiver module 1401 is further configured to receive second indication information, where the second indication information indicates to use an omitted CSI report to perform model monitoring; or the second indication information indicates user equipment to send an omitted CSI report.

In a possible implementation, the transceiver module 1401 is further configured to send fifth information, where the fifth information includes a third CSI report, the third CSI report is an omitted report, and the third CSI report is used for CSI feedback.

In a possible implementation, the first information is reported by using higher layer signaling.

In a possible implementation, the transceiver module 1401 is further configured to receive sixth information, where the sixth information indicates a first resource, and the first resource is used to transmit a complete CSI report.

In a possible implementation, the user equipment does not expect that CSI omission occurs on a CSI report used for model monitoring, or the user equipment does not expect to omit a CSI report used for model monitoring, or the user equipment does not expect that a resource used to transmit a CSI report used for model monitoring is less than a resource needed for the CSI report used for model monitoring.

In a possible implementation, when the first CSI report is the omitted report, or when a resource used to transmit the first CSI report is less than a resource needed for the first CSI report, the transceiver module 1401 is further configured to send seventh information, the seventh information includes at least one of a size of a CSI report used for model monitoring, a size of an omitted part of the CSI report used for model monitoring, a resource needed for the CSI report used for model monitoring, and a resource needed for the omitted part of the CSI report used for model monitoring.

In a possible implementation, a priority of the first CSI report is higher than a priority of the third CSI report, or priorities of report content in the first CSI report are not distinguished.

For another example, FIG. 14 is a diagram of a structure of another model monitoring apparatus according to an embodiment of this application. The model monitoring apparatus is configured to implement the foregoing model monitoring method, for example, the model monitoring methods shown in FIG. 10 and FIG. 11.

As shown in FIG. 14, the apparatus may include a transceiver module 1401 and a processing module 1402. Details are as follows.

The transceiver module 1401 is configured to receive a reference signal.

The processing module 1402 is configured to obtain ground truth CSI based on the reference signal.

The processing module 1402 is further configured to obtain first recovery CSI based on a first CSI report, where the first CSI report is obtained based on the ground truth CSI, and the first CSI report is a complete CSI report, or the first CSI report is an omitted report.

The processing module 1402 is further configured to obtain first model monitoring performance based on the ground truth CSI and the first recovery CSI.

In a possible implementation, the first CSI report is the complete report, and the transceiver module 1401 is further configured to receive first indication information, where the first indication information indicates to use a complete CSI report to perform model monitoring; or the first indication information indicates user equipment to send a complete CSI report.

In a possible implementation, the processing module 1402 is further configured to obtain second model monitoring performance based on the ground truth CSI and second recovery CSI, where the second recovery CSI is obtained based on a second CSI report, the second CSI report is an omitted report, and the second CSI report is obtained based on the reference signal.

In a possible implementation, the first CSI report is the omitted report, and the transceiver module 1401 is further configured to receive second indication information, where the second indication information indicates to use an omitted CSI report to perform model monitoring; or the second indication information indicates user equipment to send an omitted CSI report.

In a possible implementation, the transceiver module 1401 is further configured to send first information, where the first information includes a third CSI report, the third CSI report is an omitted report, and the third CSI report is used for CSI feedback.

Embodiments of this application further provide a model monitoring apparatus including modules (or means) configured to implement steps performed by the network device in any one of the foregoing methods.

For another example, FIG. 14 is a diagram of a structure of another model monitoring apparatus according to an embodiment of this application. The model monitoring apparatus is configured to implement the foregoing model monitoring methods, for example, the model monitoring methods shown in FIG. 6 and FIG. 7.

As shown in FIG. 14, the apparatus may include a transceiver module 1401 and a processing module 1402. Details are as follows.

The transceiver module 1401 is configured to send a reference signal.

The transceiver module 1401 is further configured to receive first information and second information, where the first information includes ground truth CSI, the ground truth CSI is obtained based on the reference signal, the second information includes a first CSI report, the first CSI report is obtained based on the ground truth CSI, and the first CSI report is a complete report, or the first CSI report is an omitted report.

The processing module 1402 is configured to obtain first model monitoring performance based on the first information and the second information.

In a possible implementation, the first CSI report is the complete report, and the transceiver module 1401 is further configured to send first indication information, where the first indication information indicates to use a complete CSI report to perform model monitoring; or the first indication information indicates user equipment to send a complete CSI report.

In a possible implementation, the transceiver module 1401 is further configured to receive third information, where the third information includes a second CSI report, the second CSI report is an omitted report, and the second CSI report is obtained based on the reference signal.

The processing module 1402 is configured to obtain second model monitoring performance based on the third information and the ground truth CSI.

In a possible implementation, the first CSI report is the omitted report, and the transceiver module 1401 is further configured to send second indication information, where the second indication information indicates to use an omitted CSI report to perform model monitoring; or the second indication information indicates user equipment to send an omitted CSI report.

In a possible implementation, the transceiver module 1401 is further configured to receive fourth information, where the fourth information includes a third CSI report, the third CSI report is an omitted report, and the third CSI report is used for CSI feedback.

In a possible implementation, the first information and the second information are reported by using higher layer signaling.

In a possible implementation, the transceiver module 1401 is further configured to send fifth information, where the fifth information indicates a first resource, and the first resource is used to transmit a complete CSI report.

In a possible implementation, the user equipment does not expect that CSI omission occurs on a CSI report used for model monitoring, or the user equipment does not expect to omit a CSI report used for model monitoring, or the user equipment does not expect that a resource used to transmit a CSI report used for model monitoring is less than a resource needed for the CSI report used for model monitoring.

In a possible implementation, when the first CSI report is the omitted report, or when a resource used to transmit the first CSI report is less than a resource needed for the first CSI report, the transceiver module 1401 is further configured to receive sixth information, the sixth information includes at least one of a size of a CSI report used for model monitoring, a size of an omitted part of the CSI report used for model monitoring, a resource needed for the CSI report used for model monitoring, and a resource needed for the omitted part of the CSI report used for model monitoring.

In a possible implementation, a priority of the first CSI report is higher than a priority of the third CSI report, or priorities of report content in the first CSI report are not distinguished.

For another example, FIG. 13 is a diagram of a structure of another model monitoring apparatus according to an embodiment of this application. The model monitoring apparatus is configured to implement the foregoing model monitoring methods, for example, the model monitoring methods shown in FIG. 8 and FIG. 9.

As shown in FIG. 13, the apparatus may include a transceiver module 1301. Details are as follows.

The transceiver module 1301 is configured to send a reference signal.

The transceiver module 1301 is further configured to receive first information, where the first information includes a first CSI report, the first CSI report is obtained based on the reference signal, and the first CSI report is a complete report, or the first CSI report is an omitted report.

The transceiver module 1301 is further configured to send second information, where the second information indicates first recovery CSI, and the first recovery CSI is obtained based on the first CSI report.

In a possible implementation, the first CSI report is the complete report, and the transceiver module 1301 is further configured to send first indication information, where the first indication information indicates to use a complete CSI report to perform model monitoring; or the first indication information indicates user equipment to send a complete CSI report.

In a possible implementation, the transceiver module 1301 is further configured to receive third information, where the third information includes a second CSI report, the second CSI report is an omitted report, and the second CSI report is obtained based on the reference signal; and
send fourth information, where the fourth information indicates second recovery CSI, and the second recovery CSI is obtained based on the second CSI report.

In a possible implementation, the first CSI report is the omitted report, and the transceiver module 1301 is further configured to send second indication information, where the second indication information indicates to use an omitted CSI report to perform model monitoring; or the second indication information indicates user equipment to send an omitted CSI report.

In a possible implementation, the transceiver module 1301 is further configured to receive fifth information, where the fifth information includes a third CSI report, the third CSI report is an omitted report, and the third CSI report is used for CSI feedback.

In a possible implementation, the first information is reported by using higher layer signaling.

In a possible implementation, the transceiver module 1301 is further configured to send sixth information, where the sixth information indicates a first resource, and the first resource is used to transmit a complete CSI report.

In a possible implementation, the user equipment does not expect that CSI omission occurs on a CSI report used for model monitoring, or the user equipment does not expect to omit a CSI report used for model monitoring, or the user equipment does not expect that a resource used to transmit a CSI report used for model monitoring is less than a resource needed for the CSI report used for model monitoring.

In a possible implementation, when the first CSI report is the omitted report, or when a resource used to transmit the first CSI report is less than a resource needed for the first CSI report, the transceiver module 1301 is further configured to receive seventh information, the seventh information includes at least one of a size of a CSI report used for model monitoring, a size of an omitted part of the CSI report used for model monitoring, a resource needed for the CSI report used for model monitoring, and a resource needed for the omitted part of the CSI report used for model monitoring.

In a possible implementation, a priority of the first CSI report is higher than a priority of the third CSI report, or priorities of report content in the first CSI report are not distinguished.

For another example, FIG. 13 is a diagram of a structure of another model monitoring apparatus according to an embodiment of this application. The model monitoring apparatus is configured to implement the foregoing model monitoring method, for example, the model monitoring methods shown in FIG. 10 and FIG. 11.

As shown in FIG. 13, the apparatus may include a transceiver module 1301. Details are as follows.

The transceiver module 1301 is configured to send a reference signal.

The transceiver module 1301 is further configured to receive first model monitoring performance, where the first model monitoring performance is obtained based on ground truth CSI and first recovery CSI, the first recovery CSI is obtained based on a first CSI report, the first CSI report is obtained based on the ground truth CSI, the ground truth CSI is obtained based on the reference signal, and the first CSI report is a complete CSI report, or the first CSI report is an omitted report.

In a possible implementation, the first CSI report is the complete report, and the transceiver module 1301 is further configured to send first indication information, where the first indication information indicates to use a complete CSI report to perform model monitoring; or the first indication information indicates user equipment to send a complete CSI report.

In a possible implementation, the first CSI report is the omitted report, and the transceiver module 1301 is further configured to send second indication information, where the second indication information indicates to use an omitted CSI report to perform model monitoring; or the second indication information indicates user equipment to send an omitted CSI report.

In a possible implementation, the transceiver module 1301 is further configured to receive first information, where the first information includes a third CSI report, the third CSI report is an omitted report, and the third CSI report is used for CSI feedback.

For descriptions of the foregoing modules, refer to the records of the foregoing embodiments. Details are not described herein.

It should be understood that division into the modules in the foregoing apparatuses is merely logical function division. During actual implementation, all or some of the modules may be integrated into one physical entity, or may be physically separated. In addition, the module in the model monitoring apparatus may be implemented in a form of software invoked by a processor. For example, the model monitoring apparatus includes a processor. The processor is connected to a memory. The memory stores instructions. The processor invokes the instructions stored in the memory, to implement any one of the foregoing methods or implement functions of each module of the apparatus. The processor is, for example, a general-purpose processor, for example, a central processing unit (central processing unit, CPU) or a microprocessor. The memory is a memory inside the apparatus or a memory outside the apparatus. Alternatively, the module in the apparatus may be implemented in a form of hardware circuit, and functions of some or all units may be implemented by designing the hardware circuits. The hardware circuits may be understood as one or more processors. For example, in an implementation, the hardware circuit is an application-specific integrated circuit (application-specific integrated circuit, ASIC), and the functions of some or all of the foregoing units are implemented by designing a logical relationship between elements in the circuit. For another example, in another implementation, the hardware circuit may be implemented by using a programmable logic device (programmable logic device, PLD). A field programmable gate array (field programmable gate array, FPGA) is used as an example, and the field programmable gate array may include a large quantity of logic gate circuits. A configuration file is used to configure a connection relationship between logic gate circuits, to implement functions of some or all of the foregoing units. All the modules in the apparatus may be implemented in a form of software invoked by a processor, or all the modules may be implemented in a form of hardware circuit, or some modules may be implemented in a form of software invoked by a processor, and a remaining part may be implemented in a form of hardware circuit.

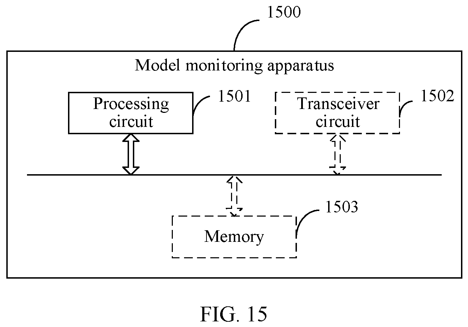

FIG. 15 is a diagram of a hardware structure of still another model monitoring apparatus according to an embodiment of this application. The model monitoring apparatus 1500 shown in FIG. 15 includes one or more processing circuits 1501 (one processing circuit is shown as an example in the figure). The processing circuit 1501 may be one or more processors, or a circuit configured for processing in the one or more processors.

Optionally, the model monitoring apparatus 1500 may further include a transceiver circuit 1502 (represented by a dashed line in the figure). The processing circuit 1501 and the transceiver circuit 1502 are coupled to each other. The transceiver circuit 1502 may be a transceiver or an interface circuit. For example, when the apparatus 1500 is a network device, a terminal device, a core network device, or an AI entity, the transceiver circuit 1502 may be the transceiver or the interface circuit. When the apparatus 1500 is a chip used in the network device, the terminal device, the core network device, or the AI entity, the transceiver circuit 1502 may be the interface circuit. For example, the AI entity may be a third-party device like an OTT or a cloud server.

Optionally, the model monitoring apparatus 1500 may further include a memory 1503 (represented by a dashed line in the figure). The memory 1503 is configured to store instructions executed by the processing circuit 1501, store input data needed for running instructions by the processing circuit 1501, or store data generated after the processing circuit 1501 runs instructions.

Optionally, the memory 1503 may be located in the one or more processors, may be located outside the one or more processors, or may include a storage part located in the one or more processors and a storage part located outside the one or more processors.

The memory 1503 may be a read only memory (read only memory, ROM), a static storage device, a dynamic storage device, or a random access memory (random access memory, RAM).

The memory 1503 may store a program. When the program stored in the memory 1503 is executed by the processing circuit 1501, the processing circuit 1501 and the transceiver circuit 1502 are configured to perform the steps of the model monitoring method in embodiments of this application.

The processing circuit 1501 is a circuit having a signal processing capability. In an implementation, the processing circuit 1501 may be a circuit having an instruction reading and running capability, for example, one or more of the following processors: a central processing unit CPU, a microprocessor, a graphics processing unit (graphics processing unit, GPU) (which may be understood as a microprocessor), a digital signal processor (digital signal processor, DSP), or a processing circuit in the foregoing processor. In another implementation, the processing circuit 1501 may implement a specific function by using a logical relationship of a hardware circuit. The logical relationship of the hardware circuit is fixed or reconfigurable. For example, the processing circuit 1501 is one or more of the following processors: a hardware circuit implemented by an ASIC or a programmable logic device PLD, for example, an FPGA or a processing circuit in the foregoing processor. In a reconfigurable hardware circuit, a process in which the processor loads a configuration document to implement hardware circuit configuration may be understood as a process in which the processor loads instructions to implement functions of some or all of the foregoing modules. In addition, the processing circuit may alternatively be a hardware circuit designed for artificial intelligence, and may be understood as an ASIC or a processing circuit in the ASIC, for example, one or more of the following processors: a neural network processing unit (neural network processing unit, NPU), a tensor processing unit (tensor processing unit, TPU), a deep learning processing unit (deep learning processing unit, DPU), or a processing circuit in the foregoing processor. The processing circuit 1501 is configured to execute a related program, to implement a function that needs to be performed by the units in the model monitoring apparatus in embodiments of this application, or perform the model monitoring method in the method embodiments of this application.

It can be learned that each module in the foregoing apparatus may be one or more processors (or processing circuits) configured to implement the foregoing method, for example, a CPU, a GPU, an NPU, a TPU, a DPU, a microprocessor, a DSP, an ASIC, an FPGA, a combination of at least two of these processor forms, or some processing circuits in the processors.

In addition, all or some of the modules in the foregoing apparatus may be integrated, or may be independently implemented. In an implementation, the modules are integrated and implemented in a form of system-on-a-chip (system-on-a-chip, SoC). The SoC may include at least one processor configured to implement any one of the foregoing methods or implement functions of the modules of the apparatus. Types of the at least one processor may be different, including, for example, a CPU and an FPGA, a CPU and an artificial intelligence processor, and a CPU and a GPU.

The transceiver circuit 1502 uses a transceiver apparatus, for example, but not limited to, a transceiver, to implement communication between the apparatus 1500 and another device or a communication network. For example, information may be obtained through the transceiver circuit 1502.

It should be noted that although only the processing circuit, the transceiver circuit, and the memory are shown in the apparatus 1500 shown in FIG. 15, in a specific implementation process, a person skilled in the art should understand that the apparatus 1500 further includes other components needed for implementing normal running. In addition, based on a specific requirement, a person skilled in the art should understand that the apparatus 1500 may further include a hardware component that implements another additional function. In addition, a person skilled in the art should understand that the apparatus 1500 may include only components necessary for implementing embodiments of this application, instead of including all the components shown in FIG. 15.

An embodiment of this application further provides a computer-readable storage medium. The computer-readable storage medium stores instructions. When the instructions are run on a computer or a processor, the computer or the processor is caused to perform one or more steps in any one of the foregoing methods.

An embodiment of this application further provides a computer program product including instructions. When the computer program product runs on a computer or a processor, the computer or the processor is caused to perform one or more steps in any one of the foregoing methods.

It should be understood that unless otherwise specified, "/" in descriptions of this application indicates an "or" relationship between associated objects. For example, A/B may indicate A or B. A and B may be singular or plural. In addition, in the descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In the several embodiments provided in this application, it should be understood that the disclosed system, apparatus, and method may be implemented in other manners. For example, division into the units is merely logical function division and may be another division in actual implementation. For example, a plurality of units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

All or some of the foregoing embodiments may be implemented by using software, hardware, firmware, or any combination thereof. When the software is used to implement embodiments, all or a part of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium, or transmitted through the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, for example, a server or a data center, integrating one or more usable media. The usable medium may be a read-only memory (read-only memory, ROM), a random access memory (random access memory, RAM), or a magnetic medium, for example, a floppy disk, a hard disk, a magnetic tape, a magnetic disk, or an optical medium, for example, a digital versatile disc (digital versatile disc, DVD), or a semiconductor medium, for example, a solid-state drive (solid-state drive, SSD).

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A model monitoring method, comprising:
receiving a reference signal; and
sending first information and second information, wherein the first information comprises ground truth CSI, the ground truth CSI is obtained based on the reference signal, the second information comprises a first CSI report, the first CSI report is obtained based on the ground truth CSI, and the first CSI report is a complete report, or the first CSI report is an omitted report.

2. The method according to claim 1, wherein the first CSI report is the complete report, and the method further comprises:
receiving first indication information, wherein the first indication information indicates to use a complete CSI report to perform model monitoring; or the first indication information indicates to send a complete CSI report.

3. The method according to claim 2, wherein the method further comprises:
sending third information, wherein the third information comprises a second CSI report, the second CSI report is an omitted report, and the second CSI report is obtained based on the reference signal.

4. The method according to claim 1, wherein the first CSI report is the omitted report, and the method further comprises:
receiving second indication information, wherein the second indication information indicates to use an omitted CSI report to perform model monitoring; or the second indication information indicates to send an omitted CSI report.

5. The method according to any one of claims 1 to 4, wherein the method further comprises:
sending fourth information, wherein the fourth information comprises a third CSI report, the third CSI report is an omitted report, and the third CSI report is used for CSI feedback.

6. The method according to claim 5, wherein the first information and the second information are reported by using higher layer signaling.

7. The method according to any one of claims 1 to 3, wherein the method further comprises:
receiving fifth information, wherein the fifth information indicates a first resource, and the first resource is used to transmit a complete CSI report.

8. The method according to any one of claims 1 to 3, wherein the user equipment does not expect that CSI omission occurs on a CSI report used for model monitoring, or the user equipment does not expect to omit a CSI report used for model monitoring, or the user equipment does not expect that a resource used to transmit a CSI report used for model monitoring is less than a resource needed for the CSI report used for model monitoring.

9. The method according to any one of claims 1 to 3 and claim 7 or 8, wherein when a CSI report used for model monitoring is omitted, or when a resource used to transmit the CSI report used for model monitoring is less than a resource needed for the CSI report used for model monitoring, the method further comprises:
sending sixth information, wherein the sixth information comprises at least one of a size of the CSI report used for model monitoring, a size of an omitted part of the CSI report used for model monitoring, the resource needed for the CSI report used for model monitoring, and a resource needed for the omitted part of the CSI report used for model monitoring.

10. The method according to claim 5 or 6, wherein a priority of the first CSI report is higher than a priority of the third CSI report, or priorities of report content in the first CSI report are not distinguished.

11. A model monitoring method, comprising:
sending a reference signal;
receiving first information and second information, wherein the first information comprises ground truth CSI, the ground truth CSI is obtained based on the reference signal, the second information comprises a first CSI report, the first CSI report is obtained based on the ground truth CSI, and the first CSI report is a complete report, or the first CSI report is an omitted report; and
obtaining first model monitoring performance based on the first information and the second information.

12. The method according to claim 11, wherein the first CSI report is the complete report, and the method further comprises:
sending first indication information, wherein the first indication information indicates to use a complete CSI report to perform model monitoring; or the first indication information indicates user equipment to send a complete CSI report.

13. The method according to claim 12, wherein the method further comprises:
receiving third information, wherein the third information comprises a second CSI report, the second CSI report is an omitted report, and the second CSI report is obtained based on the reference signal; and
obtaining second model monitoring performance based on the third information and the ground truth CSI.

14. The method according to claim 11, wherein the first CSI report is the omitted report, and the method further comprises:
sending second indication information, wherein the second indication information indicates to use an omitted CSI report to perform model monitoring; or the second indication information indicates user equipment to send an omitted CSI report.

15. The method according to any one of claims 11 to 14, wherein the method further comprises:
receiving fourth information, wherein the fourth information comprises a third CSI report, the third CSI report is an omitted report, and the third CSI report is used for CSI feedback.

16. The method according to claim 15, wherein the first information and the second information are reported by using higher layer signaling.

17. The method according to any one of claims 11 to 13, wherein the method further comprises:
sending fifth information, wherein the fifth information indicates a first resource, and the first resource is used to transmit a complete CSI report.

18. The method according to any one of claims 11 to 13 and claim 17, wherein the user equipment does not expect that CSI omission occurs on a CSI report used for model monitoring, or the user equipment does not expect to omit a CSI report used for model monitoring, or the user equipment does not expect that a resource used to transmit a CSI report used for model monitoring is less than a resource needed for the CSI report used for model monitoring.

19. The method according to any one of claims 11 to 13 and claim 17 or 18, wherein when a CSI report used for model monitoring is omitted, or when a resource used to transmit the CSI report used for model monitoring is less than a resource needed for the CSI report used for model monitoring, the method further comprises:
receiving sixth information, wherein the sixth information comprises at least one of a size of the CSI report used for model monitoring, a size of an omitted part of the CSI report used for model monitoring, the resource needed for the CSI report used for model monitoring, and a resource needed for the omitted part of the CSI report used for model monitoring.

20. The method according to claim 15 or 16, wherein a priority of the first CSI report is higher than a priority of the third CSI report, or priorities of report content in the first CSI report are not distinguished.

21. A model monitoring method, comprising:
receiving a reference signal; and
sending first information, wherein the first information comprises a first CSI report, the first CSI report is obtained based on the reference signal, and the first CSI report is a complete report, or the first CSI report is an omitted report;
receiving second information, wherein the second information indicates first recovery CSI, and the first recovery CSI is obtained based on the first CSI report; and
obtaining first model monitoring performance based on ground truth CSI and the first recovery CSI, wherein the ground truth CSI is obtained based on the reference signal.

22. The method according to claim 21, wherein the first CSI report is the complete report, and the method further comprises:
receiving first indication information, wherein the first indication information indicates to use a complete CSI report to perform model monitoring; or the first indication information indicates user equipment to send a complete CSI report.

23. The method according to claim 22, wherein the method further comprises:
sending third information, wherein the third information comprises a second CSI report, the second CSI report is an omitted report, and the second CSI report is obtained based on the reference signal;
receiving fourth information, wherein the fourth information indicates second recovery CSI, and the second recovery CSI is obtained based on the second CSI report; and
obtaining second model monitoring performance based on the ground truth CSI and the second recovery CSI.

24. The method according to claim 21, wherein the first CSI report is the omitted report, and the method further comprises:
receiving second indication information, wherein the second indication information indicates to use an omitted CSI report to perform model monitoring; or the second indication information indicates user equipment to send an omitted CSI report.

25. The method according to any one of claims 21 to 24, wherein the method further comprises:
sending fifth information, wherein the fifth information comprises a third CSI report, the third CSI report is an omitted report, and the third CSI report is used for CSI feedback.

26. A model monitoring method, comprising:
sending a reference signal;
receiving first information, wherein the first information comprises a first CSI report, the first CSI report is obtained based on the reference signal, and the first CSI report is a complete report, or the first CSI report is an omitted report; and
sending second information, wherein the second information indicates first recovery CSI, and the first recovery CSI is obtained based on the first CSI report.

27. The method according to claim 26, wherein the first CSI report is the complete report, and the method further comprises:
sending first indication information, wherein the first indication information indicates to use a complete CSI report to perform model monitoring; or the first indication information indicates user equipment to send a complete CSI report.

28. The method according to claim 27, wherein the method further comprises:
receiving third information, wherein the third information comprises a second CSI report, the second CSI report is an omitted report, and the second CSI report is obtained based on the reference signal; and
sending fourth information, wherein the fourth information indicates second recovery CSI, and the second recovery CSI is obtained based on the second CSI report.

29. The method according to claim 26, wherein the first CSI report is the omitted report, and the method further comprises:
sending second indication information, wherein the second indication information indicates to use an omitted CSI report to perform model monitoring; or the second indication information indicates user equipment to send an omitted CSI report.

30. The method according to any one of claims 26 to 29, wherein the method further comprises:
receiving fifth information, wherein the fifth information comprises a third CSI report, the third CSI report is an omitted report, and the third CSI report is used for CSI feedback.

31. A model monitoring method, comprising:
receiving a reference signal; and
obtaining ground truth CSI based on the reference signal;
obtaining first recovery CSI based on a first CSI report, wherein the first CSI report is obtained based on the ground truth CSI, and the first CSI report is a complete CSI report, or the first CSI report is an omitted report; and
obtaining first model monitoring performance based on the ground truth CSI and the first recovery CSI.

32. The method according to claim 31, wherein the first CSI report is the complete report, and the method further comprises:
receiving first indication information, wherein the first indication information indicates to use a complete CSI report to perform model monitoring; or the first indication information indicates user equipment to send a complete CSI report.

33. The method according to claim 32, wherein the method further comprises:
obtaining second model monitoring performance based on the ground truth CSI and second recovery CSI, wherein the second recovery CSI is obtained based on a second CSI report, the second CSI report is an omitted report, and the second CSI report is obtained based on the reference signal.

34. The method according to claim 31, wherein the first CSI report is the omitted report, and the method further comprises:
receiving second indication information, wherein the second indication information indicates to use an omitted CSI report to perform model monitoring; or the second indication information indicates user equipment to send an omitted CSI report.

35. The method according to any one of claims 31 to 34, wherein the method further comprises:
sending first information, wherein the first information comprises a third CSI report, the third CSI report is an omitted report, and the third CSI report is used for CSI feedback.

36. A model monitoring method, comprising:
sending a reference signal; and
receiving first model monitoring performance, wherein the first model monitoring performance is obtained based on ground truth CSI and first recovery CSI, the first recovery CSI is obtained based on a first CSI report, the first CSI report is obtained based on the ground truth CSI, the ground truth CSI is obtained based on the reference signal, and the first CSI report is a complete CSI report, or the first CSI report is an omitted report.

37. The method according to claim 36, wherein the first CSI report is the complete report, and the method further comprises:
sending first indication information, wherein the first indication information indicates to use a complete CSI report to perform model monitoring; or the first indication information indicates the user equipment to send a complete CSI report.

38. The method according to claim 36, wherein the first CSI report is the omitted report, and the method further comprises:
sending second indication information, wherein the second indication information indicates to use an omitted CSI report to perform model monitoring; or the second indication information indicates user equipment to send an omitted CSI report.

39. The method according to any one of claims 36 to 38, wherein the method further comprises:
receiving first information, wherein the first information comprises a third CSI report, the third CSI report is an omitted report, and the third CSI report is used for CSI feedback.

40. A model monitoring apparatus, comprising a module or a unit configured to implement the method according to any one of claims 1 to 10, comprising a module or a unit configured to implement the method according to any one of claims 11 to 20, comprising a module or a unit configured to implement the method according to any one of claims 21 to 25, comprising a module or a unit configured to implement the method according to any one of claims 26 to 30, comprising a module or a unit configured to implement the method according to any one of claims 31 to 35, or comprising a module or a unit configured to implement the method according to any one of claims 36 to 39.

41. A model monitoring apparatus, wherein the apparatus comprises a processor, and the processor is configured to cause, by executing a computer program (or computer-executable instructions) stored in a memory and/or by using a logic circuit, the apparatus to perform the method according to any one of claims 1 to 10, the method according to any one of claims 21 to 25, or the method according to any one of claims 31 to 35.

42. A model monitoring apparatus, wherein the apparatus comprises a processor, and the processor is configured to cause, by executing a computer program (or computer-executable instructions) stored in a memory and/or by using a logic circuit, the apparatus to perform the method according to any one of claims 11 to 20, the method according to any one of claims 26 to 30, or the method according to any one of claims 36 to 39.

43. The apparatus according to claim 41 or 42, further comprising the memory.

44. A model monitoring system, wherein the system comprises the model monitoring apparatus according to claim 41 and the model monitoring apparatus according to claim 42.

45. A computer-readable storage medium, storing a computer program, wherein when the computer program is executed by a processor, the method according to any one of claims 1 to 10 is implemented, the method according to any one of claims 11 to 20 is implemented; the method according to any one of claims 21 to 25 is implemented, the method according to any one of claims 26 to 30 is implemented, the method according to any one of claims 31 to 35 is implemented, or the method according to any one of claims 36 to 39 is implemented.

46. A computer program product comprising instructions, wherein when the computer program product runs on a processor, the method according to any one of claims 1 to 10 is implemented, the method according to any one of claims 11 to 20 is implemented; the method according to any one of claims 21 to 25 is implemented, the method according to any one of claims 26 to 30 is implemented, the method according to any one of claims 31 to 35 is implemented, or the method according to any one of claims 36 to 39 is implemented.
